# EUROPÄISCHE PATENTSCHRIFT

(11) **EP 3 450 736 B1**
(45) Veröffentlichungstag und Bekanntmachung des Hinweises auf die Patenterteilung: **20.11.2024**
(21) Anmeldenummer: 18192514.0
(22) Anmeldetag: 04.09.2018
(51) Int. Cl.: F02K 1/12, F02K 1/16, F02K 1/72, F02K 1/74, F02K 1/76, F02K 3/075

(54) **STRAHLTRIEBWERK MIT SCHUBDÜSE VARIABLER GEOMETRIE SOWIE SCHUBUMKEHRVORRICHTUNG**
JET ENGINE WITH VARIABLE GEOMETRY FAN NOZZLE AND THRUST REVERSER
TURBORÉACTEUR AVEC TUYÈRE À GÉOMÉTRIE VARIABLE ET INVERSEUR DE POUSSÉE

(30) Priorität: 04.09.2017 EP 17189225; 04.09.2017 EP 17189227
(43) Veröffentlichungstag der Anmeldung: 06.03.2019
(73) Patentinhaber: Brandenburgische Technische Universität Cottbus-Senftenberg, 03046 Cottbus (DE)
(72) Erfinder: GRASSELT, David, 03046 Cottbus (DE); KAZULA, Stefan, 03052 Cotbus (DE); HÖSCHLER, Klaus, 12307 Berlin (DE)
(74) Vertreter: Braeuning Schubert Patentanwälte GbR

(56) Entgegenhaltungen:
- WO-A1-2015/155434
- US-A- 4 922 713
- US-A1- 2010 192 715
- US-A1- 2012 137 654

## Beschreibung

Die vorliegende Erfindung betrifft zunächst ein Strahltriebwerk, das insbesondere für Flugzeuge verwendet wird. Weiterhin betrifft die Erfindung auch ein Verfahren zum Betreiben eines Strahltriebwerks.

Strahltriebwerke an sich sind im Stand der Technik bereits seit langem bekannt und weisen eine Reihe unterschiedlicher Komponenten auf. Bei der Ansteuerung mehrerer, prinzipiell unabhängiger, beweglicher Komponenten mit hohen Anforderungen an die funktionale Sicherheit wird in der Regel auf die Separation von Systemen gesetzt. Das bedeutet, dass die Zuordnung einer Funktion zu einem System erfolgt und dass dieses System nur für diese Funktion zuständig ist.

Weiterhin ist die Reduktion der Masse eines fliegenden Systems in direkter Verbindung mit der Zunahme der Leistungsfähigkeit: Leichtere Flugzeuge sind bei ansonsten gleichen Bedingungen in der Lage, mit geringerem Brennstoffverbrauch oder mit höherer Nutzlast zu operieren. Das Einsparen von Bauteilen oder ganzen Systemen reduziert die Gesamtmasse eines Flugzeugs.

Moderne Flugtriebwerke weisen zunehmend höhere Nebenstromverhältnisse auf. Meist damit verbunden sind höhere Fanschaufellängen und Gehäusedurchmesser. Bei höheren Fanschaufellängen kann die Einführung einer variablen Nebenstromdüse von entscheidendem Vorteil hinsichtlich Operabilität, Effizienz und Robustheit zukünftiger Flugtriebwerke sein. Bei weiter steigenden Nebenstromverhältnissen wird die Einführung einer variablen Nebenstromdüse zunehmend relevanter. Jedoch ist die Umsetzung für zivile Unterschallflugzeuge mit Turbofantriebwerken bislang zu komplex und vor allem hinsichtlich des Gewichts zu schwer, als das Flugzeug- oder Triebwerkhersteller einen entscheidenden Vorteil zum jetzigen Zeitpunkt ausmachen konnten. Dies liegt primär an den zusätzlichen Systemen, die für eine variable Nebenstromdüse erforderlich werden, wie beispielsweise Antriebs-system, Kontrollsystem, Verschlusssystem, Anzeigesystem.

Neben variablen Nebenstromdüsen weisen Strahltriebwerke häufig auch Schubumkehreinrichtungen auf. Das Aktorsystem einer Schubumkehreinrichtung oder einer variablen Nebenstromdüse ist immer nur Teil eines Gesamtsystems. Zu einem Gesamtsystem Schubumkehrsystem gehören neben den statischen und beweglichen strukturellen Flächenbauteilen, die für die aerodynamische Umlenkung zuständig sind, ein Kontrollsystem, ein Signal- beziehungsweise Indikationssystem, ein Verschlusssystem und das Aktorsystem. Gleiches gilt für eine variable Nebenstromdüse.

Weitere bekannte Ansätze, die beispielsweise in der US 2015/0308373 A1, US 9086035 B und US 2013/0161414 A1 beschrieben sind, separieren die funktionalen Flächen beziehungsweise strukturellen Bauteile der variablen Nebenstromdüse und der Schubumkehreinrichtung. Jedoch beinhalten diese Konzepte auch stets zwei Aktoren, die für die separate Ansteuerung der Teilsysteme zuständig sind.

In der US 2013/0008145 A1, von der die vorliegende Erfindung ausgeht, wird ein Aktorsystem mit einem Aktor für variable Nebenstromdüse und Schubumkehreinrichtung beschrieben. Die konstruktive Umsetzung der Kopplung und Entkopplung, der wesentliche Teil eines solchen Systems, wird jedoch nicht beschrieben. Weiterhin beschränkt sich die bekannte Lösung auf Triebwerke mit hohen Nebenstromverhältnissen größer 10. Bei der bekannten Lösung ist zudem immer eine Verbindung von Schubumkehreinrichtung und variablen Nebenstromdüse vorhanden. Damit ist eine unabhängige Bewegung nicht möglich und es müssten ansonsten Zwangskräfte auftreten. Der Funktionsablauf der bekannten Lösung sieht eine gestufte Freigabe der Schubumkehreinrichtung vor.

Nicht zuletzt gibt es im Stand der Technik bereits Konzepte, die sich auf die Umsetzung einer strukturellen Kopplung zwischen variabler Nebenstromdüse und Schubumkehreinrichtung beziehen. Beispiele hierzu finden sich in der WO 2015/155434 A1, der US 4,922,713 B oder der US 2012/0137654 A1.

Die Aufgabe der vorliegenden Erfindung besteht darin, ein Strahltriebwerk bereitzustellen, welches möglichst gewichtsreduziert realisiert ist.

Diese Aufgabe wird erfindungsgemäß gelöst durch das Strahltriebwerk mit den Merkmalen gemäß dem unabhängigen Patentanspruch 1 sowie durch das Verfahren mit den Merkmalen gemäß dem unabhängigen Patentanspruch 8. Weitere Merkmale und Details der Erfindung ergeben sich aus den Unteransprüchen, der Beschreibung sowie den Zeichnungen. Dabei gelten Merkmale und Details, die im Zusammenhang mit dem erfindungsgemäßen Strahltriebwerk beschrieben sind, vollumfänglich auch im Zusammenhang mit dem erfindungsgemäßen Verfahren, und umgekehrt, so dass bei den beiden Erfindungsaspekten hinsichtlich deren Offenbarung wechselseitig vollinhaltlich Bezug genommen wird. Insbesondere wird im Rahmen der Beschreibung des erfindungsgemäßen Strahltriebwerks auch dessen Funktionsweise erläutert, Die Offenbarung hinsichtlich der Funktionsweise der Strahltriebwerks stellt gleichzeitig auch Merkmale betreffend das Verfahren zum Betrieb des Strahltriebwerks dar, so dass eine entsprechende, im Zusammenhang mit dem Strahltriebwerk stehende Offenbarung ebenfalls eine Offenbarung hinsichtlich des erfindungsgemäßen Verfahrens darstellt.

Der Grundgedanke der vorliegenden Erfindung liegt darin, dass ein gekoppeltes Aktorsystemkonzept für eine Schubumkehreinrichtung und eine variable Nebenstromdüse eines Strahltriebwerks, insbesondere eines Flug-Triebwerks, realisiert ist.

Die vorliegende Erfindung zielt insbesondere auf das Weiterbestehen separater Stellflächen für die variable Nebenstromdüse und die Schubumkehreinrichtung und auf eine Vereinigung der Aktorsysteme von Schubumkehreinrichtung und variabler Nebenstromdüse ab.

Eine Schubumkehreinrichtung, die ausschließlich im Nebenstromkanal zur Anwendung kommt, ist ab Nebenstromverhältnissen von größer 5 denkbar, da die Effizienz der Schubumkehreinrichtung sonst sehr gering ist. Das erfindungsgemäße Strahltriebwerk ist nicht auf ein bestimmtes Nebenstromverhältnis beschränkt.

Die vorliegende Erfindung konzentriert sich auf ein Aktorsystem für eine variable Nebenstromdüse und eine Schubumkehreinrichtung, die nur den Luftstrom des Nebenstromkanals umlenkt. Im Gegensatz dazu verwendet die Lösung der US 2013/0008145 A1 eine Schubumkehreinrichtung, die sowohl den Luftstrom des Nebenstromkanals als auch des Kerntriebwerks umfasst,

Das erfindungsgemäße Konzept unterscheidet sich von der Lehre der US 2013/0008145 A1 insofern, dass
- ausschließlich ein Antrieb pro Stelltrieb Verwendung findet, statt einen selektiven Antrieb zu verwenden,
- das koppelnde Element in Form eines Verbindungselements sich nicht über den Aktor ansteuert sondern über die nicht bewegliche Triebwerkgondel. Dadurch werden zum einen keine veränderlichen Distanzen zwischen Antrieb und Koppelelement erzeugt und zum anderen müssen nicht permanent elektronische Bauteile bewegt werden.

Gemäß dem ersten Aspekt der Erfindung wird ein Strahltriebwerk bereitgestellt, welches insbesondere für ein Flugzeug verwendet wird, und welches die Merkmale des unabhängigen Patentanspruchs 1 aufweist.

Ein solches Strahltriebwerk weist zunächst eine Triebwerkgondel auf, über welche das Strahltriebwerk an einem Flugzeug, beispielsweise einem Flugzeugflügel, befestigt wird. Die Triebwerkgondel stellt das Gehäuse des Strahltriebwerks, insbesondere dessen Außengehäuse dar.

Innerhalb der Triebwerkgondel befindet sich ein in an sich bekannter Weise ausgebildetes Kerntriebwerk mit einem das Kerntriebwerk umgebenden Kerntriebwerkgehäuse, wobei durch das Kerntriebwerk ein Kernstrom führbar und im Betrieb des Triebwerks geführt ist. Der Kernstrom ist eintrittsseitig bevorzugt ein Luftstrom, der beim Durchlaufen des Kerntriebwerks mit einem Brennstoff vermischt wird.

Zwischen dem Kerntriebwerkgehäuse und der Triebwerkgondel verläuft Nebenstromkanal, wobei durch den Nebenstromkanal ein Nebenstrom führbar beziehungsweise im Betrieb des Triebwerks geführt ist. Der Nebenstrom ist bevorzugt ebenfalls ein Luftstrom, der eintrittsseitig in das Strahltriebwerk eintritt.

Bevorzugt ist das Strahltriebwerk so aufgebaut, dass an dessen Eintrittsseite ein Luftstrom eintritt, der dann in einen Kernstrom und einen Nebenstrom aufgeteilt wird.

Weiterhin weist das Strahltriebwerk eine Schubumkehreinrichtung, die ausgebildet ist, dass sie im aktivierten Betriebszustand nur, das heißt ausschließlich den Nebenstrom des Nebenstromkanals umlenkt.

Zudem weist das Strahltriebwerk eine variable Nebenstromdüse auf, welche zur Bereitstellung einer variablen Austrittsfläche der Nebenstromdüse ausgebildet ist. Dazu weist die Nebenstromdüse variable, das heißt verstellbare Stellflächen auf.

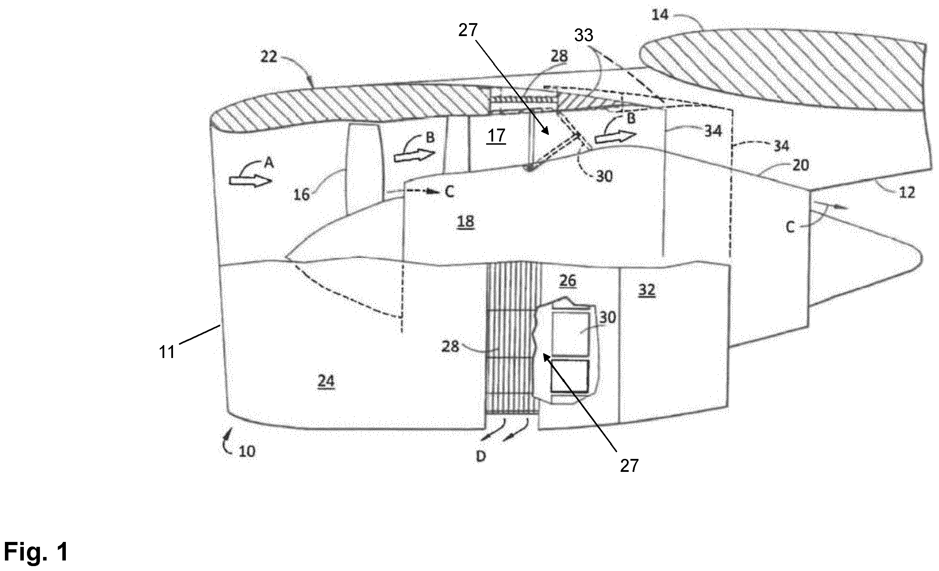

Ein solches Strahltriebwerk ist auch im Zusammenhang mit der Figur 1 weiter unten im Detail beschrieben, so dass zum Aufbau des Strahltriebwerks an dieser Stelle auch auf die entsprechenden Ausführungen zur Figur 1 vollinhaltlich Bezug genommen und verwiesen wird.

Erfindungsgemäß weist das Strahltriebwerk ein einziges gemeinsames Aktorsystem sowohl für die Schubumkehreinrichtung als auch für die variable Nebenstromdüse auf. Bei einem Aktor handelt es sich insbesondere um einen Antrieb, so dass es sich bei dem Aktorsystem folglich um ein Antriebssystem handelt. Das Aktorsystem ist die Gesamtheit von Bauteilen und Komponenten, die eine gemeinsame Funktion haben, nämlich den Antrieb der variablen Nebenstromdüse und der Schubumkehreinrichtung.

Das Aktorsystem ist derart bereitgestellt, dass es in der Lage ist, die Schubumkehreinrichtung und die variable Nebenstromdüse mechanisch miteinander zu koppeln und voneinander zu entkoppeln. Eine Kopplung bedeutet in diesem Fall insbesondere, dass durch technische Vorrichtungen, hier die Bestandteile der Schubumkehreinrichtung und der variablen Nebenstromdüse, miteinander verbunden und zum Zusammenwirken gebracht werden. Das Entkoppeln stellt dann ein entsprechendes voneinander Trennen dar. Wie diese im Einzelnen umgesetzt und realisiert ist, wird im weiteren Verlauf der Beschreibung im Detail erläutert.

Zunächst galt es herauszufinden, welche Bauteile für das mechanische Koppeln und Entkoppeln der Schubumkehreinrichtung und der variablen Nebenstromdüse geeignet sind, wobei gleichzeitig der erforderliche Bauraum und das Gewicht reduziert werden sollen. Es wurden solche Bauteile identifiziert, die die gleiche Funktion aufweisen. Hierbei handelt es sich beispielsweise um ein Stelltriebelement, den Antrieb, ein Verschlusselement, Lagerelemente, oder aber auch übertragende und statische Komponenten. Die Erfinder haben herausgefunden, dass sich für eine Kopplung/Entkopplung insbesondere Verschlusskomponenten und Stellelemente eignen. Dies hat schließlich zum erfindungsgemäßen Aktorsystem geführt.

Erfindungsgemäß weist das Aktorsystem eine Stelltriebeinrichtung auf, welche, insbesondere fest, mit der variablen Nebenstromdüse verbunden ist. Die Stelltriebeinrichtung ist zum Stellen, insbesondere zum Verstellen der variablen Stellflächen der Nebenstromdüse ausgebildet, Das ist Aktorsystem so ausgebildet, dass die Schubumkehreinrichtung wahlweise hinzugeschaltet und mitbewegt wird. Einzelne Komponenten der Stelltriebeinrichtung werden weiter unten näher erläutert.

Im erfindungsgemäßen Aktorsystem sind die Aktoren, beispielsweise Rollengewindetriebe, vorzugsweise mit Elektromotor und/oder Kontrollsystem, jederzeit fest mit dem Stellsystem und damit mit der variablen Nebenstromdüse verbunden. Wahlweise und insbesondere aus einer vorher definierten Position wird ein weiteres System, die Schubumkehreinrichtung, hinzugeschaltet und mit bewegt. Im Gegensatz dazu wird bei der bekannten Lösung aus der US 2013/0008145 A1 der Aktor in zwei Teile unterteilt, wobei ein Teil die variable Nebenstromdüse antreibt und der andere Teil die Schubumkehreinrichtung.

Ein wesentlicher Bestandteil des erfindungsgemäßen Strahltriebwerks ist die Schubumkehreinrichtung. Die Schubumkehreinrichtung ist bevorzugt als Kaskaden-Schubumkehreinrichtung ausgebildet. Die Hauptfunktion der Schubumkehreinrichtung besteht darin, den Schub für eine Bremswirkung umzukehren. Der Nebenstrom, der durch den Nebenstromkanal hindurchströmt, wird blockiert und in eine andere Richtung umgeleitet.

Moderne Triebwerke mit Nebenstromverhältnissen höher als fünf verwenden entweder Kaskaden-Schubumkehreinrichtungen oder Drehklappen-Schubumkehreinrichtung. Kaskaden-Schubumkehreinrichtungen haben eine lineare Aktuatorik, wohingegen Drehklappen-Schubumkehreinrichtungen einen Aktuator verwenden, der sich linear vergrößert und gleichzeitig um einen Lagerpunkt ausschwenkt. Prinzipiell ist eine Kombination des erfindungsgemäßen Aktorsystemkonzepts mit einer Drehklappen-Schubumkehreinrichtung möglich.

Bevorzugt ist die Schubumkehreinrichtung jedoch als Kaskaden-Schubumkehreinrichtung ausgebildet. Die Kaskaden-Schubumkehreinrichtung weist eine oder mehrere Blockadetüre(n) auf, die bei der Aktivierung der Schubumkehreinrichtung in den Nebenstromkanal hineingeklappt werden und damit den Strömungsweg versperren. Dabei muss ein Aktuator sich nur in einer einzigen Achse bewegen. Die Blockadetüren zwingen den Nebenstrom somit, einen anderen Weg über die Kaskaden zum Austritt zu gehen. Die Blockadetüren sind insbesondere an einem zweiten, beweglichen Triebwerkgondelteil angelenkt, welches weiter unten näher beschrieben ist. Dieser zweite Triebwerkgondelteil deckt auch die Kaskaden ab und positioniert die Blockadetür im verstauten Zustand gegen den zweiten, beweglichen Triebwerkgondelteil. Der bewegliche zweite Triebwerkgondelteil wird über das Aktorsystem linear bewegt. Es ist optional möglich, die Kaskaden an einem statischen ersten Triebwerkgondelteil, der weiter unten näher beschrieben wird, zu befestigen oder sie als bewegliche Kaskaden zu konstruieren, die an dem zweiten beweglichen Triebwerkgondelteil befestigt sind. Wenigstens eine als Verriegelungssystem ausgebildete Sicherungseinrichtung, die im weiteren Verlauf der Beschreibung näher erläutert wird, fixiert die Teile der Schubumkehreinrichtung im verstauten Modus, insbesondere an einem statischen ersten Triebwerkgondelteil. Die Steuerung ist verantwortlich für die korrekte Auslösung der Verriegelungsmechanismen und des Aktors. Sie nutzt beispielsweise Informationen des Motorcontrollers, des Schubhebels und des Bodenstatusschalters vom Fahrwerk des Flugzeugs. Ein Anzeigesystem zeigt den Status der Schubumkehreinrichtung an.

Ein weiterer wesentlicher Bestanteil des Strahltriebwerks ist die variable Nebenstromdüse. Diese ist bevorzugt als Nebenstromdüse in Klappenausführung ausgebildet.

Für variable Nebenstromdüsen gibt es ebenfalls diverse Varianten. Eine mögliche Lösung ist die Kombination des erfindungsgemäßen Aktorsystems mit einem Düsenklappenkonzept. Zur Verfügung gestellt wird in diesem Fall über den Aktor eine lineare Stellbewegung, die zum Beispiel mit einer beidseitig gelenkig gelagerten Koppelstange auch nichtlineare Bewegungen der Düsenklappe ermöglicht. Der variable Teil der Nebenstromdüse ist bevorzugt an der Außenseite des Nebenstromkanals im hinteren Bereich der Triebwerksgondel befestigt. Variable Düsenkonzepte können sowohl für Unterschall als auch für Überschallanwendung in Frage kommen, wie zum Beispiel für geplante supersonische Geschäftsreiseflugzeuge, und sind deshalb auch jeweils mit einem gekoppelten Aktorsystemkonzept denkbar. Die Hauptfunktionen einer variablen Nebenstromdüse bestehen darin, einen Teil der potentiellen Energie der Luft durch Expansion mit minimalem Verlust, Luftwiderstand und Emissionen in kinetische Energie umzuwandeln, und/oder als Steuergerät zu arbeiten, das einen bestimmten Gegendruck zum Motor unterstützt und den Arbeitspunkt optimiert. Ein Konzept, das eine lineare Anstellung anwenden könnte, ist ein Klappenkonzept auf Schienen. Es hat mehrere Klappen, die entlang der Hinterkante der Nebenstromdüse verteilt sind. Jede Klappe ist mit einer Schiene an dem statischen Teil der Düse befestigt. Die Klappe ist an dem Aktorsystem am vorderen Ende der Klappe angelenkt. Das Aktorsystem enthält oft eine Sicherungseinrichtung in Form einer Verriegelung, die weiter untern im Detail beschrieben ist und welche nur axiale Kräfte aufnehmen muss.

Die vorliegende Erfindung verwirklicht insbesondere ein Konzept, mit dem es möglich ist, wesentliche Komponenten eines Aktorsystems für eine variable Nebenstromdüse einzusparen. Stattdessen wird die Funktion der Düsenquerschnittsvariation in ein existierendes System integriert, welches bei den meisten Verkehrsflugzeugen mit Turbofantriebwerken Anwendung findet, nämlich: das Aktorsystem der Schubumkehreinrichtung. Das erfindungsgemäße Konzept fokussiert die Zurverfügungstellung von Bewegungsspielraum bzw. eines Antriebssystems und dessen zugrundeliegende Mechanik.

Das technische Problem ist die Notwendigkeit einer variablen Neben-stromdüse zu befriedigen und gleichzeitig den geringstmöglichen Gewichts-zuwachs zu verursachen. Dies wird mit der vorliegenden Erfindung realisiert, indem funktional ähnliche Subsysteme, beispielsweise Aktoren, mit geringer räumlicher Entfernung zueinander zusammengefasst werden. Dabei wurde darauf geachtet, dass das neue Aktorsystem maximalen Freiraum in der Konzeption und Gestaltung der aerodynamischen Systeme, das heißt der Schubumkehreinrichtung und der variablen Nebenstromdüse, zulässt. Hierdurch werden funktionell unnötig redundante Baugruppen entfernt und in Folge dessen das Gewicht reduziert, ohne Sicherheitsaspekte zu beeinträchtigen.

Die Erfindung ist insbesondere ein, in einer Machbarkeitsstudie inklusive Sicherheitsanalyse und Gewichtsassessment, ausgearbeitetes gemeinsames Aktorsystemkonzept für eine Schubumkehreinrichtung und eine variable Nebenstromdüse, insbesondere für Flugtriebwerke. Weiterhin kann mit dem gekoppelten Aktorsystemkonzept eine signifikante Gewichtsreduktion im Vergleich zu getrennten Aktorsystemen für variable Nebenstromdüsen und Schubumkehreinrichtungen erzielt werden. Des Weiteren sind durch dieses Konzept weniger Bauteile und damit weniger Gewicht in beweglichen Komponenten, beispielsweise einem beweglichen Triebwerkgondelteil, verbaut. Aktuatoren werden ausschließlich in relativ zum Flugzeug statischen Komponenten integriert. Letzteres erleichtert die Verbindung mit Kontrollsystemen des Flugzeugs und des Triebwerks, verringert die Anzahl möglicher Fehlerszenarien und erhöht damit die Sicherheit.

Das erfindungsgemäße Aktorsystem ist grundsätzlich für die Kombination von unterschiedlichen Schubumkehrsystemen oder variablen Neben-stromdüsen einsetzbar. Darüber hinaus ist das gekoppelte Aktorsystemkonzept auch in weiteren Industriezweigen denkbar, sofern mehrere Funktionen kombiniert werden sollen, die unabhängig voneinander aktiv sein sollen. Es kann immer nur eine Funktion bedient werden. Das hier dargestellte Aktorsystemkonzept für ein Flugtriebwerk vereinigt bevorzugt eine Kaskaden-Schubumkehreinrichtung und eine variable Nebenstromdüse in Klappenausführung.

Erfindungsgemäß besteht die Triebwerkgondel aus mehreren Teilen.

Erfindungsgemäß weist die Triebwerkgondel in Strömungsrichtung des das Strahltriebwerk durchströmenden Strömungsmediums einen vorderen ersten Triebwerkgondelteil auf, der eingangsseitig einen Einlass aufweist. Der erste Triebwerkgondelteil ist insbesondere statisch, das heißt nicht beweglich. Der erste Triebwerkgondelteil kann beispielsweise fest am Flügel eines Flugzeugs angeordnet sein.

Erfindungsgemäß weist die Triebwerkgondel in Strömungsrichtung des das Strahltriebwerk durchströmenden Strömungsmediums einen sich an den ersten Triebwerkgondelteil anschließenden zweiten Triebwerkgondelteil auf, welcher die Schubumkehreinrichtung aufweist. Insbesondere ist der zweite Triebwerkgondelteil relativ zum ersten Triebwerkgondelteil in axialer Richtung beweglich gelagert. Wenn im Folgenden von axialer Richtung gesprochen wird, heißt dies insbesondere, dass eine Bewegung entlang einer Längsachse des Strahltriebwerks erfolgt, die sich von dessen Eintrittsseite, wo der Luftstrom eintritt, zu dessen Austrittseite, wo der Strom das Strahltriebwerk wieder verlässt, erstreckt.

Das Ausfahren und Einfahren der Schubumkehreinrichtung wird erreicht, indem eine Relativbewegung zwischen den Komponenten statischer erster Triebwerkgondelteil und Schubumkehreinrichtung erzeugt wird.

In weiterer Ausgestaltung weist die Triebwerkgondel in Strömungsrichtung des das Strahltriebwerk durchströmenden Strömungsmediums bevorzugt einen sich an den zweiten Triebwerkgondelteil anschließenden dritten Triebwerkgondelteil auf, welcher die variablen Stellflächen der variablen Nebenstromdüse beinhaltet.

Im Folgenden wird das erfindungsgemäße Aktorsystem im Detail beschrieben, und wie damit eine Kopplung von variabler Nebenstromdüse und Schubumkehreinrichtung realisiert wird.

Das Aktorsystem besteht bevorzugt aus mehreren Untersystemen mit einzelnen Komponenten, die während des Betriebs zumindest teilweise miteinander in Wechselwirkung stehen und zusammenwirken. Zusammenwirken heißt in diesem Fall insbesondere, dass die einzelnen Komponenten zusammenarbeiten und vereint wirken.

Bevorzugt besteht das erfindungsgemäße Aktorsystemkonzept im Wesentlichen aus vier Hauptbestandteilen, welche nachfolgend erläutert werden.

Ein erstes Untersystem des Aktorsystems weist bevorzugt Aktorkomponenten auf, die, insbesondere fest, mit dem ersten, statischen Triebwerkgondelteil verbunden sind und sich nicht relativ zu dem Flugzeug, an dem sich das Strahltriebwerk befindet, bewegen. Diese Aktorkomponenten weisen beispielsweise wenigstens einen Antrieb auf, der beispielsweise als Motor, als hydraulischer Zylinder oder als ein anderer elektrischer, hydraulischer oder pneumatischer Antrieb ausgebildet ist. Weiterhin können diese Aktorkomponenten wenigstens ein Stelltriebelement aufweisen, beispielsweise einen Stab, eine Gewindespindel oder dergleichen. Unter diese Aktorkomponenten können auch fixierte Lagerelemente fallen, aber auch bestimmte Sicherungseinrichtungen, die für sich genommen auch ein weiteres, viertes Untersystem bilden können, welches weiter unten erläutert wird. Weitere Aktorkomponenten dieses ersten Untersystems können sein wenigstens ein Getriebe, beispielsweise ein Planetengetriebe, wenigstens ein Lager, beispielsweise ein Kugellager, wenigstens eine Schienenstützstruktur und wenigstens eine Schiene für einen beweglichen Aktorring, oder wenigstens eine Erweiterung des statischen ersten Triebwerkgondelteils sowie der Pylon, über den das Strahltriebwerk an dem Flügel befestigt wird.

Das Aktorsystem weist bevorzugt ein zweites Untersystem mit strukturellen Komponenten der Schubumkehreinrichtung auf, die insbesondere derart ausgebildet sind, dass sie zur Betätigung der Schubumkehreinrichtung bewegt werden oder bewegbar sind. Hierbei kann es sich beispielsweise um den beweglichen zweiten Triebwerkgondelteil, wenigstens einen Gondelring des beweglichen zweiten Triebwerkgondelteils, wenigstens einen in dem Ring fixierten Schlitten, die Blockadetüren der Schubumkehreinrichtung, wenigstens eine Einrichtung Schiene und Lager zum Bewegen der variablen Nebenstromdüse relativ zur Schubumkehreinrichtung sowie der Schubumkehreinrichtung zum Aktorsystem, um Zugstangen zur Verbindung der Blockadetüren mit dem Kerntriebwerk, sowie um den statischen Teil der Nebenstromdüse handeln, der wahlweise eine Schiene oder einen Schlitten für die Relativbewegung der Düsenklappe beinhaltet.

Erfindungsgemäß weist das Aktorsystem ein drittes Untersystem mit Betätigungskomponenten und Translationsbauteilen auf, die axial verschiebbar sind und die direkt mit der variablen Nebenstromdüse verbunden sind. Die Betätigungskomponenten und Translationsbauteile weisen insbesondere einen ersten Aktorring, der mit einer Sicherungseinrichtung zum Begrenzen der Bewegung des ersten Aktorrings in axialer Richtung zusammenwirkt, und/oder bevorzugt einen zweiten Aktorring und/oder einen dritten Aktorring, der/die mit einem Anschlag, insbesondere einem Ring, des zweiten Triebwerkgondelteils zusammenwirkt/zusammenwirken, und/oder eine Gewindemutter, die mit dem Stelltriebelement des ersten Untersystems zusammenwirkt, auf. Die Komponenten des dritten Untersystems sind insbesondere solche Komponenten, die sich immer bewegen und die insbesondere mit der variablen Nebenstromdüse, insbesondere fest, verbunden sind. Zu diesem dritten Untersystem gehören insbesondere auch solche Komponenten, die sich bei Verwendung des Aktuators immer bewegen und damit für eine relative Verschiebung zwischen der variablen Nebenstromdüse und dem Rest der Triebwerkgondel, und/oder für eine relative Verschiebung zwischen variablen Schubumkehrelementen und dem statischen ersten Triebwerkgondelteil sorgen. Weitere Komponenten dieses dritten Untersystems können sein, wenigstens ein Kaskadensegment, welches die Umlenkschaufeln der Schubumkehreinrichtung trägt, wenigstens eine Schiene zur Ermöglichung einer Relativbewegung zwischen Schubumkehreinrichtung und Aktorsystem, wenigstens eine lange Koppelstange und wenigstens eine kurze Koppelstange, wenigstens eine Düsenklappe der variablen Nebenstromdüse und wenigstens eine Schiene oder wenigstens ein Schlitten der Düsenklappe.

Erfindungsgemäß weist das Aktorsystem ein viertes Untersystem mit wenigstens einer Sicherungseinrichtung auf, welche bereitgestellt ist, dass sie die Schubumkehreinrichtung gegen ein unbeabsichtigtes Betätigen sichert. Bei den Sicherungseinrichtungen handelt es sich um solche Komponenten, die für die Sicherung gegen ein ungewolltes Betätigen der Schubumkehreinrichtung verantwortlich sind. Die Komponenten dieses vierten Untersystems werden nachfolgend genauer beschrieben.

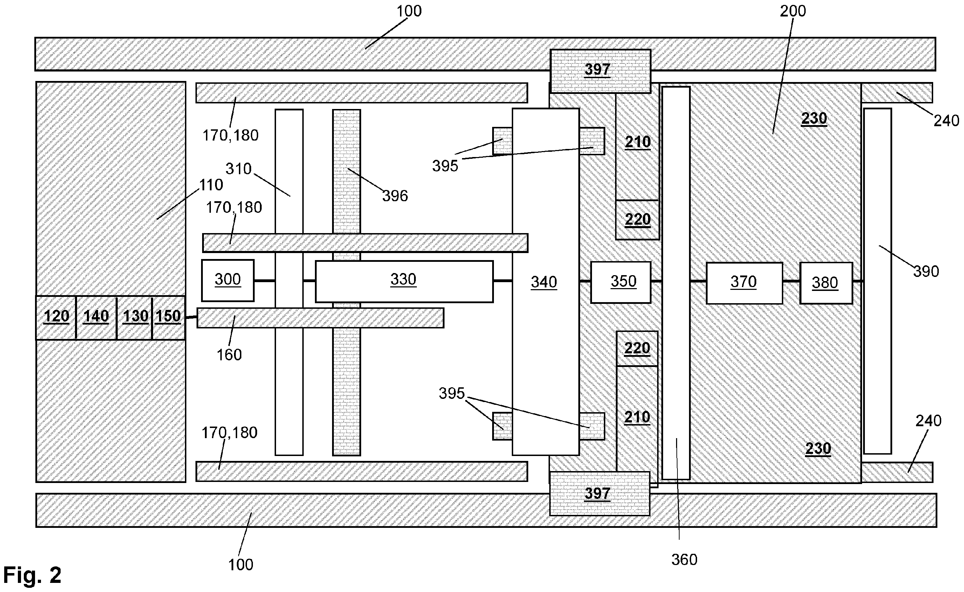

Die einzelnen Untersysteme, deren Komponenten sowie das Zusammenwirken der einzelnen Komponenten sowie der einzelnen Untersysteme ist auch in den Figuren 2 bis 4 dargestellt und im Zusammenhang damit beschrieben, so dass hinsichtlich der Offenbarung der vorstehend genannten vier Untersysteme sowie deren Komponenten auch auf die Ausführungen zu den Figuren 2 bis 4 weiter unten vollinhaltlich Bezug genommen und verwiesen wird.

Zu den Sicherungseinrichtungen werden im Folgenden eine Reihe von Ausführungsbeispielen beschrieben, die einzeln oder aber in beliebiger Kombination in dem erfindungsgemäßen Strahltriebwerk realisiert sein können.

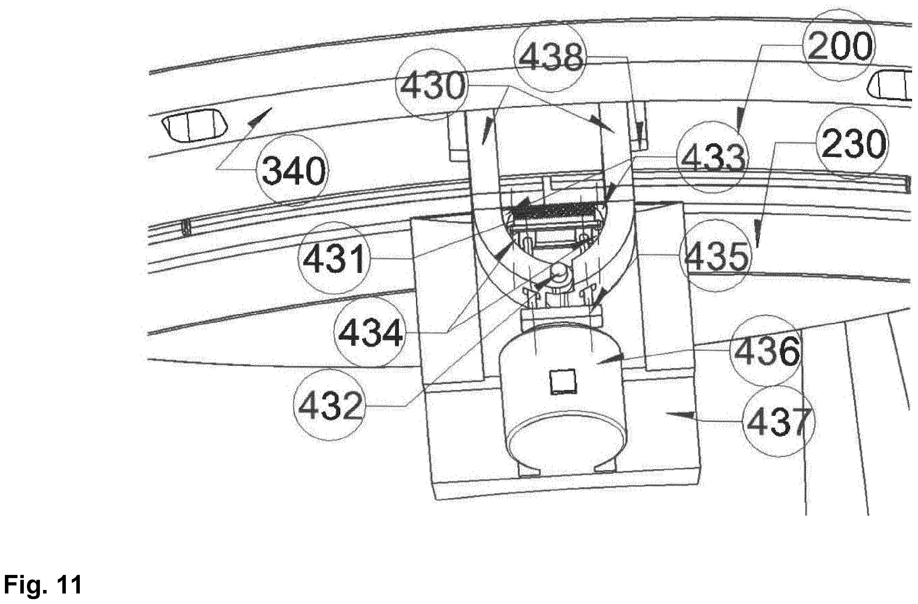

Wenigstes eine Sicherungseinrichtung weist wenigstens eine Hakenverschlusseinrichtung auf, welche zur lösbaren Verbindung des ersten - statischen - Triebwerkgondelteils mit dem zweiten - beweglichen -Triebwerkgondelteil ausgebildet ist. Die Betätigung der Hakenverschlusseinrichtung erfolgt insbesondere über einen Aktor des Aktorsystems. Ein solches Hakenverschlusselement ist auch in Figur 11 dargestellt und im Zusammenhang damit beschrieben, so dass hinsichtlich der Offenbarung des Hakenverschlusselements sowie dessen Funktionsweise auch auf die Ausführungen zu Figur 11 weiter unten vollinhaltlich Bezug genommen und verwiesen wird.

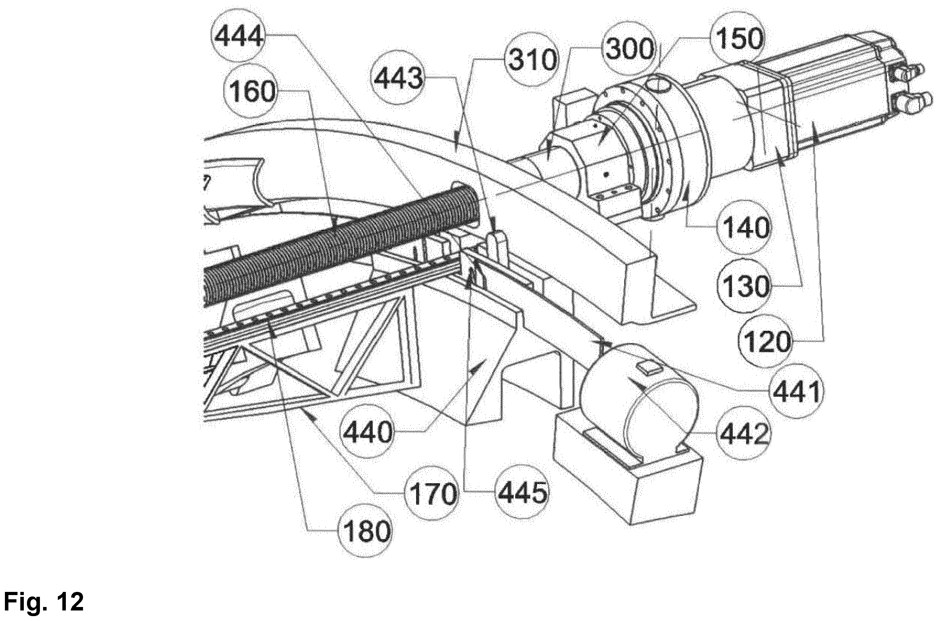

Wenigstens eine Sicherungseinrichtung ist als wenigstens eine Ring-Verschlusseinrichtung ausgebildet, wobei die Ring-Verschlusseinrichtung ausgebildet ist, um im aktivierten Betriebszustand den Bewegungsweg des ersten Aktorrings des dritten Untersystems des Aktorsystems in axialer Richtung zu begrenzen, insbesondere über die Position der Ring-Verschlusseinrichtung hinaus. Eine solche Ring-Verschlusseinrichtung ist auch in den Figuren 12 bis 16 dargestellt und im Zusammenhang damit beschrieben, so dass hinsichtlich der Offenbarung der Ring-Verschlusseinrichtung sowie deren Funktionsweise auch auf die Ausführungen zu den Figuren 12 bis 16 weiter unten vollinhaltlich Bezug genommen und verwiesen wird.

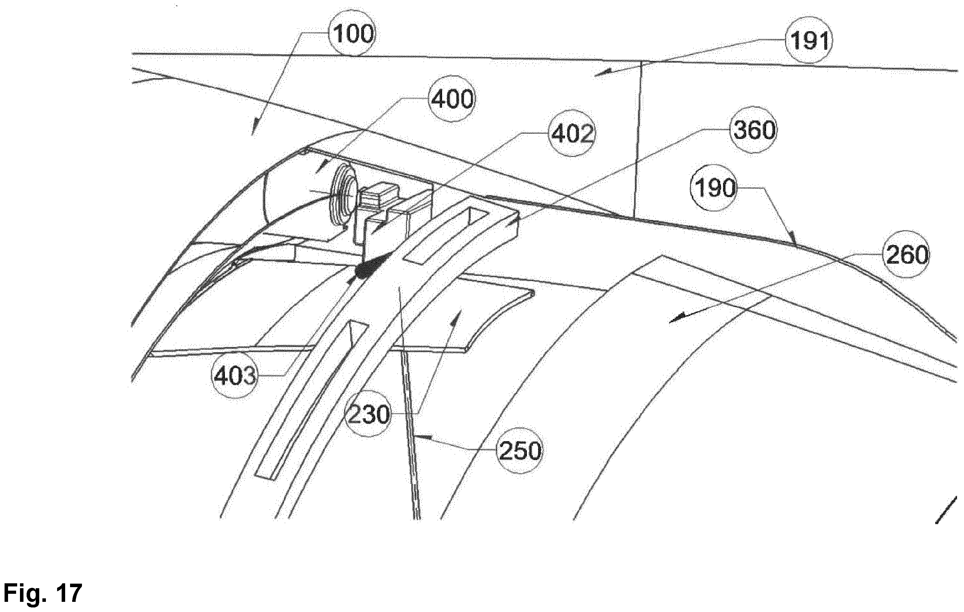

Erfindungsgemäß ist wenigstens ein Sicherungselement als eine Verschluss-Koppel-Einrichtung ausgebildet, die bereitgestellt ist, dass sie in einer ersten Funktion die Variation der variablen Nebenstromdüse gestattet und eine Translation des zweiten Triebwerkgondelteils mit der Schubumkehreinrichtung verhindert, und dass sie in einer zweiten Funktion eine Translation des zweiten Triebwerkgondelteils mit der Schubumkehreinrichtung gestattet. Eine solche Verschluss-Koppel-Einrichtung ist auch in den Figuren 17 bis 20 dargestellt und im Zusammenhang damit beschrieben, so dass hinsichtlich der Offenbarung der Verschluss-Koppel-Einrichtung sowie deren Funktionsweise auch auf die Ausführungen zu den Figuren 17 bis 20 weiter unten vollinhaltlich Bezug genommen und verwiesen wird.

Erfindungsgemäß sind diese drei unterschiedlichen Typen von Sicherungseinrichtungen gemeinschaftlich vorhanden.

Gemäß dem zweiten Aspekt der Erfindung wird ein Verfahren zum Betrieb eines Strahltriebwerks bereitgestellt, wobei das Strahltriebwerk aufweist eine Triebwerkgondel, ein innerhalb der Triebwerkgondel angeordnetes Kerntriebwerk mit einem das Kerntriebwerk umgebenden Kerntriebwerkgehäuse, wobei durch das Kerntriebwerk ein Kernstrom geführt wird, einen zwischen dem Kerntriebwerkgehäuse und der Triebwerkgondel verlaufenden Nebenstromkanal, wobei durch den Nebenstromkanal ein Nebenstrom geführt wird, eine Schubumkehreinrichtung, die im aktivierten Betriebszustand nur den Nebenstrom des Nebenstromkanals umlenkt, eine variable Nebenstromdüse mit variablen Stellflächen, über welche die Austrittsfläche verändert wird. Das Verfahren ist dadurch gekennzeichnet, dass die Schubumkehreinrichtung und die variable Nebenstromdüse über einziges gemeinsames Aktorsystem betätigt werden, indem das Aktorsystem über eine Stelltriebeinrichtung, welche mit der variablen Nebenstromdüse verbunden ist, im Betriebszustand "Nebenstromdüse", die variablen Stellflächen der Nebenstromdüse zum Verändern der Austrittsfläche der Nebenstromdüse verstellt und im Betriebszustand "Schubumkehr" die Schubumkehreinrichtung hinzuschaltet und mitbewegt.

Zum Ablauf des Verfahrens wird zusätzlich zu den nachfolgenden Ausführungen auch auf die entsprechenden Verfahrensbeschreibungen im Zusammenhang mit dem erfindungsgemäßen Strahltriebwerk verwiesen. Bevorzugt wird das Verfahren mit einem Strahltriebwerk gemäß dem ersten Aspekt der Erfindung durchgeführt.

Der Aufbau des erfindungsgemäßen Strahltriebwerks sowie dessen Funktionsweise während des Betriebs kann zudem auch wie folgt beschrieben werden.

Im Betriebszustand "Nebenstromdüse" arbeitet eine Verschluss-Koppel-Einrichtung als Verriegelung und koppelt das Aktorsystem nicht mit den Komponenten der Schubumkehreinrichtung. Der Antrieb, beispielsweise ein Motor, wird elektronisch angetrieben und die Bremse auf der Antriebswelle ist entriegelt. Das Planetengetriebe überträgt die Motorleistung auf die erforderliche Drehzahl der Antriebswelle der Stelltriebeinrichtung, beispielsweise eine Planetenrollenspindel. Die Mutter der Planetenrollenspindel bewegt sich in Motorachsrichtung und damit alle Komponenten, die damit verbunden sind, insbesondere die Komponenten des dritten Untersystems, wie weiter oben beschrieben, sowie die Düsenklappen der Nebenstromdüse. Eine Ring-Verschlusseinrichtung verhindert, dass der erste Aktorring weiter als bis zur axialen Position der Ring-Verschlusseinrichtung betätigt wird. Außerdem fixiert die Hakenverschlusseinrichtung den beweglichen zweiten Triebwerkgondelteil mit dem statischen ersten Triebwerkgondelteil an mehreren Positionen entlang der Umfangsrichtung, zweimal pro C-Kanal. Die redundante Verschluss-Koppel-Einrichtung ist in einer entkoppelten und verriegelten Position, die die Übersetzung der variablen Nebenstromdüse ermöglicht und die Übersetzung des beweglichen zweiten Triebwerkgondelteils verhindert. Unter allen Bedingungen sind alle Schlösser so ausgelegt, dass sie die Übersetzung verhindern, selbst wenn alle anderen Schlösser pro C-Kanal versagen. Alle Verriegelungsmechanismen werden separat gesteuert und betrieben, wie es in der Luftfahrt üblich ist. Eine relative Bewegung der sich bewegenden Komponenten in positiver axialer Richtung in Bezug auf den zweiten beweglichen Triebwerkgondelteil ist bis zur Berührung des zweite Aktorrings und des Gondelrings des zweiten Triebwerkgondelteils möglich, der die maximale Düsenflächenposition der Düsenklappe der Nebenstromdüse angibt. Eine Relativbewegung in negativer axialer Richtung ist bis zur Berührung des dritten Aktorrings und dem Gondelring des zweiten Triebwerkgondelteils möglich, der die minimale Düsenflächenposition der Düsenklappe der Nebenstromdüse angibt. Die Relativbewegung erfolgt mit geringer Reibung unter Verwendung einer Profilführung in O-Anordnung zwischen dem Gondelring und den sich bewegenden Komponenten. Eine lange und eine kurze Koppelstange überträgt die axiale Translation der sich bewegenden Koppelteile auf die Translation der Düsenklappe, was durch eine hyperbolische Funktion beschrieben wird. Die Düsenklappen-Übersetzungskurve wird durch eine Schienen-Schlitten-Konstruktion beschrieben, wobei die Schiene Teil des zweiten Triebwerkgondelteils ist.

Der Schubumkehr-Betätigungsmodus ist nur bei der Landung anwendbar. Vor der Landephase erfordert der Endanflug den Betrieb in einer hohen Leerlaufdrehzahl, um eine schnelle Wiederbeschleunigung und eine hohe Schubverfügbarkeit aufgrund von Sicherheitsanforderungen zu ermöglichen. Eine offene Nebenstromdüse liefert ausreichend niedrigen Schub zum Landen, während das Triebwerk bei einer erforderlichen hohen Leerlaufdrehzahl des Rotors weiterläuft, um die zuvor erläuterte Anforderung zu erfüllen. Zusätzlich ist nach dem Bodenkontakt des Flugzeugs eine schnelle Aktivierung der Bremssysteme des Flugzeugs einschließlich der Schubumkehr erforderlich. Beide Anforderungen führen zu der architektonischen Anforderung, die Möglichkeit zu haben, die variable Nebenstromdüse schnell anzupassen oder die Schubumkehr zu aktivieren. Dies kann mit dem erfindungsgemäßen Aktorkonzept erreicht werden. Aus der maximalen Düsenflächen-Position ist es möglich, die Schubumkehr sofort zu entfalten. Die Schubumkehr kann eingesetzt werden, wenn der Motor und die Bremse mit Strom versorgt sind und mit ihnen die beweglichen Antriebskomponenten, die Ring-Verschlusseinrichtung entriegelt, abhängig von der Motorsteuerung, die die Position der einzelnen Komponenten des Aktorsystems überprüft, die Hakenverschlusseinrichtung entsperrt ist, abhängig vom Schubhebel-Befehl, und die Verschluss.-Koppeleinrichtung entsperrt / gekoppelt ist, abhängig vom Bodenkontakt bzw. Bodenkontaktschalter, geschützt mit einer Isolationseinheit, die die Energieversorgungen eines der Verriegelungsmechanismen übernimmt.

Die Schubumkehr wird eingesetzt, wenn der Gondelring des zweiten beweglichen Triebwerkgondelteils an dem zweiten Aktorring gekoppelt ist durch den zweiten Aktorring in den vollständig ausgefahrenen geschoben wird, Die Düsenklappe der Nebenstromdüse bleibt in dem maximal geöffneten Zustand, da der zweite bewegliche Triebwerkgondelteil und der dritte Gondelteil, die Nebenstromdüse, für die Zeit, in der die Schubumkehreinrichtung in Verwendung ist, festgelegt sind. Die Fixierung wird mit der Sicherungseinrichtung realisiert, die vom Verbindungszustand des statischen ersten Triebwerkgondelteils mit dem beweglichen zweiten Triebwerkgondelteil in den Zustand des Anschlusses des Triebwerkgondelteils an das Aktorsystem gedrückt wird, wobei ein kleiner Elektromotor im Inneren des statischen ersten Triebwerkgondelteils verwendet wird. Die Sicherungseinrichtung bleibt während der Schubumkehr in dieser Position und verriegelt den beweglichen zweiten Triebwerkgehäuseteil automatisch mit dem statischen ersten Triebwerkgehäuseteil, sobald sich der zweite Triebwerkgehäuseteil in der Position befindet. Während die Schubumkehreinrichtung verwendet wird, wird die Sicherungseinrichtung durch ein Halteelement gehalten, das am statischen ersten Triebwerkgehäuseteil befestigt ist. Das bewegliche zweite Triebwerkgehäuseteil wird zusätzlich durch die Verbindung mit dem Aktorsystem und die Verbindung des ersten Aktorrings mit den vorderen Schienensystemen und mit der Bremse in seiner maximalen axialen Position am statischen ersten Triebwerkgehäuseteil gesichert. Die Schubumkehreinrichtung wird von dem entfalteten in den verstauten Modus zurückgezogen, wenn das Aktorsystem den zweiten Aktorring und damit den Gondelring des zweiten Triebwerkgondelteils unter Verwendung des Kopplers zieht. Bei Erreichen der verstauten Position wird der zweite Triebwerkgondelteil automatisch durch die Hakenverschlusseinrichtung und die Verschluss-Koppel-Einrichtung verriegelt und zusätzlich wird die Ring-Verschlusseinrichtung durch einen kleinen Elektromotor in den verriegelten Zustand geschaltet. Der Ring-Verschlusseinrichtung-Motor betätigt einen Ring. Damit ändert sich die Ausrichtung von Verriegelungen, die an einer statischen Komponente angelenkt sind, die von einem gesperrten in einen entsperrten Zustand oder umgekehrt umschalten. Im Falle einer unpassenden Bewegung des ersten Aktorrings, die zu einem unbeabsichtigten Schubumkehr-Einsatz führen würde, wird die Hauptlast von dem ersten Aktorring zu den Verriegelungen und direkt zu der statischen Komponente übertragen. Die Hakenverschlusseinrichtung ist ein Doppelhakenkonzept, das mit einer Federkraft vorgespannt wird, um automatisch in die Verriegelungsposition einrasten zu können. Während es möglich ist, die Verriegelung mit einem kleinen Linearantrieb zu lösen, werden der zweite Triebwerkgondelteil und die Schubumkehreinrichtung automatisch blockiert, wenn er/sie in die verstaute Position zurückkehrt.

Die Erfindung wird nun anhand von Ausführungsbeispielen unter Bezugnahme auf die beiliegenden Zeichnungen näher erläutert. Es zeigen
Figur 1 eine Übersicht über ein Strahltriebwerk gemäß der vor-liegenden Erfindung;
Figuren 2 bis 4 verschiedene Prinzipskizzen eines Aktorsystems des Strahltriebwerks in verschiedenen Betriebszuständen;
Figuren 5 bis 8 verschiedene Ausschnitte des Aktorsystems mit Blick auf wesentliche statische, Stell- und Schubumkehrkomponenten in verschiedenen Stellungen;
Figur 9 einen Ausschnitt des Aktorsystems mit Blick auf ein Schlitten-Schienen-System zwischen Stelltriebeinrichtung und Schubumkehreinrichtung;
Figur 10 die Antriebsseite des Aktorsystems und ein inneres Schlitten-Schienen-System;
Figur 11 eine Sicherungseinrichtung in Form einer Hakenverschlusseinrichtung;
Figuren 12 bis 16 verschiedene Ansichten einer Sicherungseinrichtung in Form einer Ring-Verschlusseinrichtung; und
Figuren 17 bis 20 verschiedene Ansichten einer Sicherungseinrichtung in Form einer Verschluss-Koppel-Einrichtung.

In Figur 1 ist ein Strahltriebwerk 10 für ein Flugzeug dargestellt, in welchem die vorliegende Erfindung verwirklicht ist. Die vorliegende Erfindung weist insbesondere ein besonderes Aktorsystem auf, welches in den weiteren Figuren 2 bis 20 im Detail beschrieben wird.

Das Strahltriebwerk 10 ist über einen Pylonen 12 am Flügel 14 eines Flugzeugs befestigt. Das Strahltriebwerk 10 saugt Luft A im Bereich des Einlasses 11 durch die Rotation eines Fans 16 an. Die eingesaugte Luft A wird dann in zwei Luftströme aufgeteilt, welche B in einen Nebenstromkanal 17 und C in das Kerntriebwerk 18 gelangen. Der Nebenstromkanal 17 ist eine Passage zwischen den Strukturbauteilen Kerntriebwerksgehäuse 20 und Triebwerkgondel 22. Die Triebwerkgondel 22 ist in drei Bereiche unterteilt. Der erste Triebwerkgondelteil 24 bildet den vorderen, relativ zum Flugzeug statischen Anteil der Triebwerkgondel 22. Der mittlere Teil der Triebwerkgondel 22 ist als beweglicher Triebwerkgondelteil 26 ausgebildet und beinhaltet die Komponenten der Schubumkehreinrichtung 27, die Kaskaden 28, bei denen es sich um Umlenkschaufelgitter handelt, und die Blockadetüren 30. Ferner weist die Triebwerkgondel 22 einen dritten Triebwerkgondelteil 32 auf, der die Stellflächen, das heißt die Düsenklappen einer variablen Nebenstromdüse 33 beinhaltet.

Im unteren Bereich der Figur 1 wird die Schubumkehreinrichtung 27 in aktiviertem Zustand dargestellt. Im oberen Bereich der Figur 1 ist der mit der Strichlinie dargestellte Zustand ebenfalls die aktivierte Schubumkehreinrichtung 27, der mit der Volllinie dargestellte Zustand die deaktivierte Schubumkehreinrichtung 27. Während des Großteils des Flugbetriebs ist die Schubumkehreinrichtung 27 deaktiviert und die Luft B des Nebenstromkanals 17 entweicht aus der Austrittsfläche 34 der variablen Nebenstromdüse 32. Während des Verzögerns eines Flugzeugs auf der Landebahn kann die Schubumkehreinrichtung 27 aktiviert werden. Der Luftstrom B des Nebenstromkanals 17 entweicht nicht nach hinten sondern aus der Schubumkehreinrichtung 27 als Schubumkehrstrahl D. Zur Verbesserung der Zugänglichkeit zum Kerntriebwerk 18 werden einige Gondelteile, einschließlich der Schubumkehreinrichtung 27 meist zweiteilig aufgebaut. Da sich die Ringform dann zu zwei Halbringen in Form eines "C" abändert und es sich dabei um die äu-ßere Begrenzung des Nebenstromkanals 17 handelt, spricht man in der Fachsprache auch von "C-Kanälen" beziehungsweise "C-Ducts".

Gemäß der vorliegenden Erfindung ist es nunmehr möglich, die Schubumkehreinrichtung 27 sowie die variable Nebenstromdüse 33, insbesondere die variablen Düsenklappen der Nebenstromdüse 33 über ein einziges, gemeinsames Aktorsystem zu bewegen. Dieses Aktorsystem wird nunmehr im Detail beschrieben.

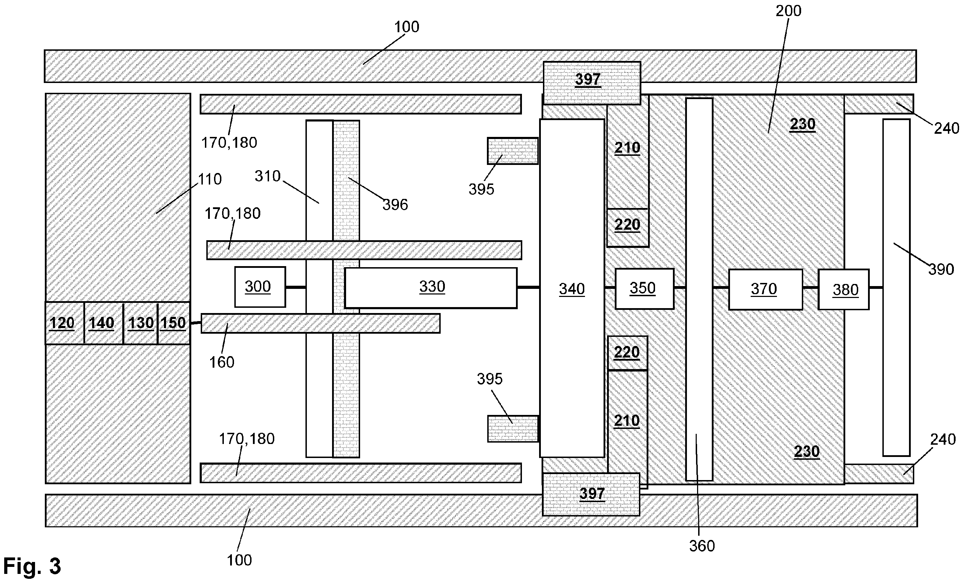

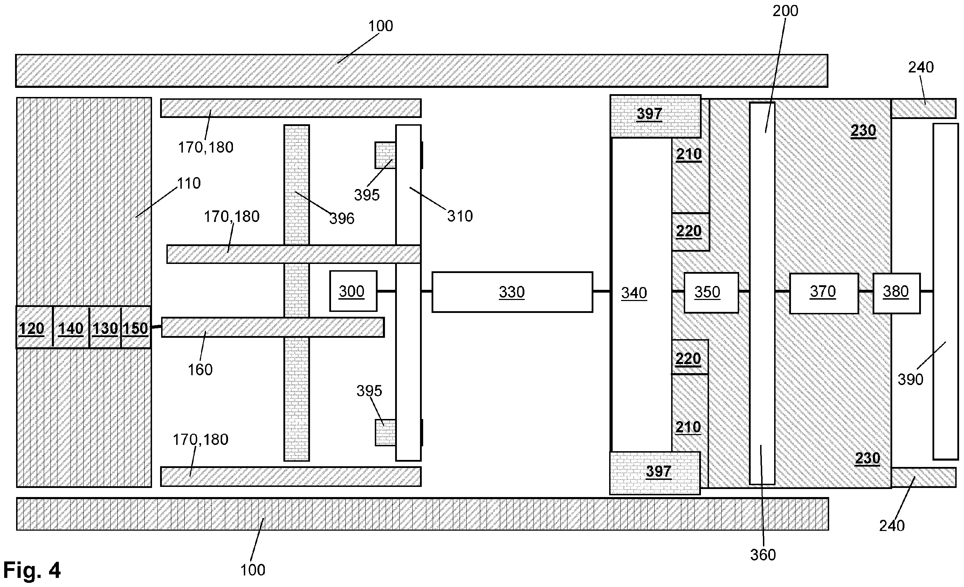

In den Figuren 2 bis 4 ist zunächst prinzipiell dargestellt, wie ein solches Aktorsystem aufgebaut ist. Figur 2 zeigt dabei eine Prinzipskizze, bei der sich das Aktorsystem in Position einer geschlossenen Schubumkehreinrichtung und minimaler Austrittsfläche der variablen Nebenstromdüse befindet. Figur 3 zeigt eine Prinzipskizze, bei der sich das Aktorsystem in Position einer geschlossenen Schubumkehreinrichtung und maximaler Austrittsfläche der variablen Nebenstromdüse befindet. Figur 4 zeigt eine Prinzipskizze, bei der sich das Aktorsystem in Position einer geöffneten Schubumkehreinrichtung und maximaler Austrittsfläche der variablen Nebenstromdüse befindet.

Das Aktorsystem besteht im Wesentlichen aus vier Hauptbestandteilen, die im Folgenden als Untersysteme bezeichnet sind.

Ein erstes Untersystem weist Aktorkomponenten auf, die mit dem ersten, statischen Triebwerkgondelteil 24 aus Figur 1 verbunden sind. Die Aktor-komponenten des ersten Untersystems sind in den Figuren 2 bis 4 mit einer von links unten nach rechts oben verlaufenden Schraffur versehen.

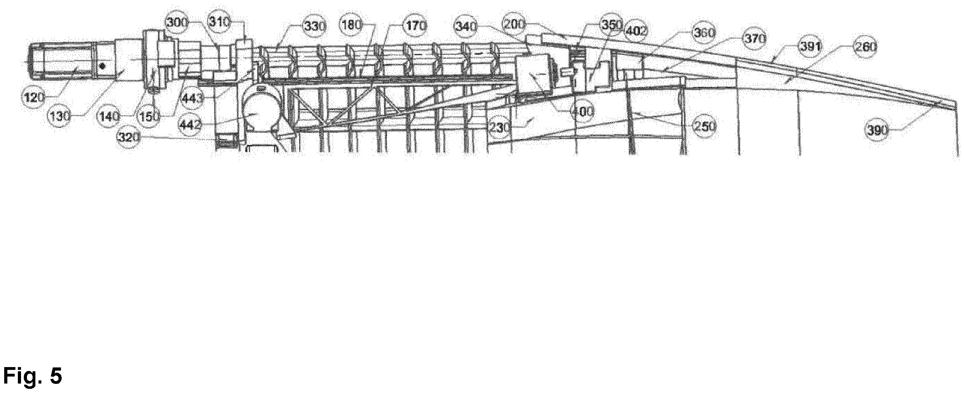

Zu diesem ersten Untersystem gehören die Komponenten, die fest mit dem statischen ersten Triebwerkgondelteil, welches abweichend von Figur 1 im Folgenden mit Bezugsziffer 100 versehen und im Folgenden auch als "SC" bezeichnet wird, verbunden sind und sich relativ zum Flugzeug nicht bewegen. Die Komponenten des ersten Untersystems werden im Folgenden bisweilen auch statische Gondel genannt. Diese Komponenten umfassen ein Lagerstruktur 110, einen Antriebsmotor 120, ein Planetengetriebe "PGB" 130, eine Bremse 140, ein Kugellager "BRG" 150 ein Stelltriebelement in Form einer Gewindespindel 160, die auch als Rollengewindetrieb ausgebildet sein kann, eine Schienenstützstruktur 170 und Schienen 180 zur Verschiebung eines Aktorrings, eine Erweiterung 190 des statischen ersten Triebwerkgondelteils und den Pylon 191. Die beiden letztgenannten Komponenten sind in den Figuren 5 bis 8 dargestellt.

Ein zweites Untersystem weist strukturelle Komponenten der Schubumkehreinrichtung auf, die insbesondere derart ausgebildet sind, dass sie zur Betätigung der Schubumkehreinrichtung bewegt werden oder bewegbar sind. Die Aktorkomponenten des zweiten Untersystems sind in den Figuren 2 bis 4 mit einer von rechts unten nach links oben verlaufenden Schraffur versehen.

Die zu diesem zweiten Untersystem gehörenden Komponenten umfassen den beweglichen zweiten Triebwerkgondelteil 200, der auch mit "TC" bezeichnet wird, einen Gondelring 210 des zweiten Triebwerkgondelteils, einen im Gondelring 210 fixierten Schlitten 220, die Blockadetüren 230 der Schubumkehreinrichtung, die Schienen 240 zum Bewegen der variablen Düse relativ zur Schubumkehreinrichtung, die Zugstangen 250 zur Verbindung der Blockadetüren mit dem Kerntriebwerk, sowie den statischen Teil 260 der Nebenstromdüse, der wahlweise eine Schiene oder einen Schlitten für die Relativbewegung der Düsenklappe beinhaltet. Die beiden letztgenannten Komponenten sind in den Figuren 5 bis 8 dargestellt.

Ein drittes Untersystem weist Betätigungskomponenten und Translationsbauteile auf, die axial verschiebbar sind und die direkt mit der variablen Nebenstromdüse verbunden sind, Die Komponenten des dritten Untersystems sind in den Figuren 2 bis 4 ohne Füllung dargestellt.

Das dritte Untersystem umfasst diejenigen Komponenten, die sich bei Verwendung des Aktorsystem immer bewegen und damit für eine relativ Verschiebung zwischen variabler Nebenstromdüse und dem Rest der Triebwerkgondel, sowie für eine relativ Verschiebung zwischen variablen Schubumkehrelementen und dem statischen ersten Triebwerkgondelteil sorgen. Hierbei handelt es sich um die Gewindemutter 300, die auch als Nut bezeichnet wir, ein erster Aktorring 310, ein Kaskadensegment 330 welches die Umlenkschaufeln der Schubumkehreinrichtung trägt, ein zweiter Aktorring 340, eine Schiene 350 zur Ermöglichung einer Relativbewegung zwischen Schubumkehreinrichtung und Aktorsystem, ein dritter Aktorring 360, eine lange Koppelstange 370, eine kurze Koppelstange 380, eine Düsenklappe 390 der Nebenstromdüse und die Schiene oder der Schlitten der Düsenklappe 391. Letztere ist in den Figuren 5 bis 8 dargestellt.

Ein viertes Untersystem weist wenigstens eine Sicherungseinrichtung auf, welche bereitgestellt ist, dass sie die Schubumkehreinrichtung gegen ein unbeabsichtigtes Betätigen sichert. Diese Komponenten sind in den Figuren 2 bis 4 mit einer "Ziegelsteinfüllung" markiert. Die Sicherungseinrichtungen können insbesondere Bestandteil eines der vorgenannten drei Untersysteme sein, insbesondere des ersten und zweiten Untersystems. Eine erste Sicherungseinrichtung liegt in Form einer Hakenverschlusseinrichtung 395 vor. Eine zweite Sicherungseinrichtung liegt in Form einer Ring-Verschlusseinrichtung 396 vor. Eine dritte Sicherungseinrichtung ist als eine Verschluss-Koppeleinrichtung 397 ausgebildet. Die genannten Sicherungseinrichtungen werden im weiteren Verlauf der Figurenbeschreibung noch näher erläutert.

Dargestellt werden in den Figuren 2 bis 4 die drei wesentlichen Endpositionen, a) bei minimaler Düsenfläche und geschlossener Schubumkehreinrichtung in Figur 2, b) bei maximaler Düsenfläche und geschlossener Schubumkehreinrichtung in Figur 3, c) bei maximaler Düsenfläche und geöffneter Schubumkehreinrichtung, wobei eine kontinuierliche Positionierung der Aktorkomponenten des dritten Untersystems zwischen Zustand a} und Zustand b} möglich ist. Die geöffnete und verschlossene Schubumkehreinrichtung ist darüber hinaus auch in Figur 1 dargestellt. Eine kontinuierliche Positionierung der Aktorkomponenten ist gleichbedeutend mit einer kontinuierlichen Düsenflächenvariation.

Die Variation der Düsenfläche wird erreicht, indem eine Relativbewegung zwischen den Komponenten der Schubumkehreinrichtung des Untersystems 2 und des Stellsystems mit den Komponenten des Untersystems erzeugt wird. Diese Relativbewegung ist möglich, wenn der Motor 120 sich dreht und gleichzeitig der Verschlussmechanismus Bremse 140 eine Drehung zulässt. Dann wird die Antriebsenergie, ein Drehmoment, über das Planetengetriebe "PGB" 130 gewandelt und an den Gewindespindeltrieb 160 übertragen. Dieser setzt die Mutter 300 in eine axiale Bewegung um. Axiale Lasten, welche durch den Gewindespindeltrieb 160 übertragen werden könnten, werden durch ein Kugellager "BRG" 150 aufgenommen. Wird die Mutter 300 axial bewegt, so bewegen sich auch die mit ihr fest verbundenen Komponenten des dritten Untersystems.

Abhängig von der Lastverteilung und der Leistungsfähigkeit der Komponenten des Stellsystems können die Komponenten dabei einfach oder mehrfach ausgeführt sein. Insbesondere sind damit die Anzahl der Motoren 120, der Bremsen 140, der Getriebe 130, der Lager 150, der Gewindetriebe 160, der Gewindemuttern 300, aller Schienen-Schlittensysteme und der Koppelstangen 370 und 380 adressiert.

Eine schienengelagerte Düsenklappe stellt nur eine mögliche Lösung für eine variable Nebenstromdüse dar und kann gegebenenfalls auch durch andere Lösungen ausgetauscht werden, welche eine parallel zur Triebwerksachse verlaufende Bewegung zum Verstellen nutzen. Die Düsenklappen der variablen Nebenstromdüse können über ein Schiene-Schlitten-System an dem Gondelteil "TC" 200 beweglich gelagert werden, da sich die "TC" während des Betriebs der variablen Nebenstromdüse nicht bewegt. Radiale und tangentiale Lasten werden durch diese Lagerung aufgenommen. Axiale Lasten hingegen werden an das Stellsystem gemäß dem dritten Untersystem weitergegeben und letztendlich durch das Kugellager 150 in die statische Struktur abgeleitet. Hinsichtlich der rein axialen Bewegung der Komponenten Mutter 300 bis lange Koppelstange 370 des Stellsystems nach Untersystem 3, ergibt sich für die elliptische Bewegung einer Düsenklappe 390 die Notwendigkeit einer beidseitig gelenkig gelagerten Verbindung der kurzen Koppelstange 380.

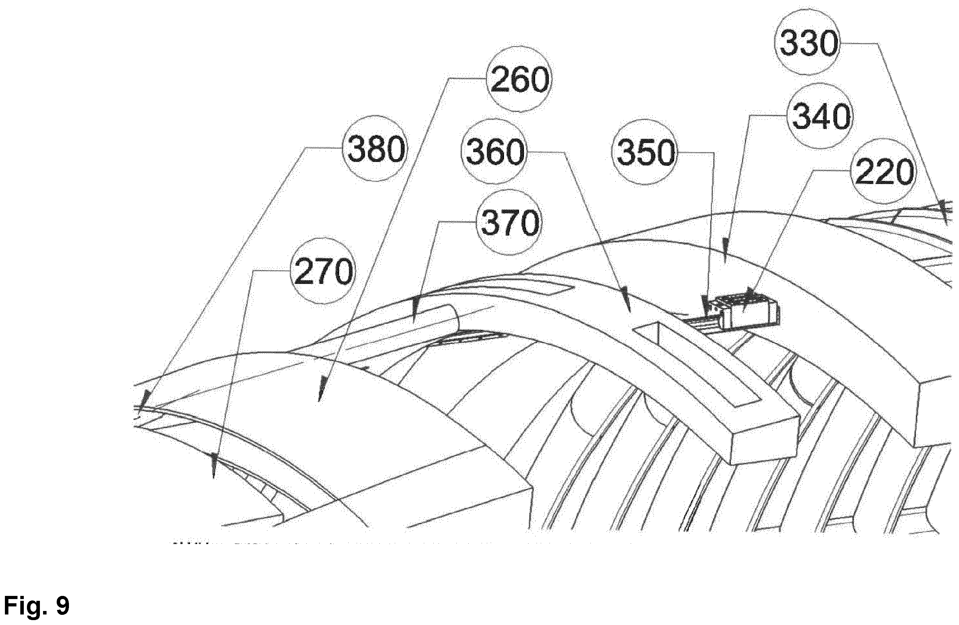

Die radialen und tangentialen Lasten, welche die "TC" aufnehmen muss oder selbst erzeugt, werden durch die Schienensysteme 350 und 240 in das Stellsystem abgeführt, wie auch in Figur 9 verdeutlicht ist.

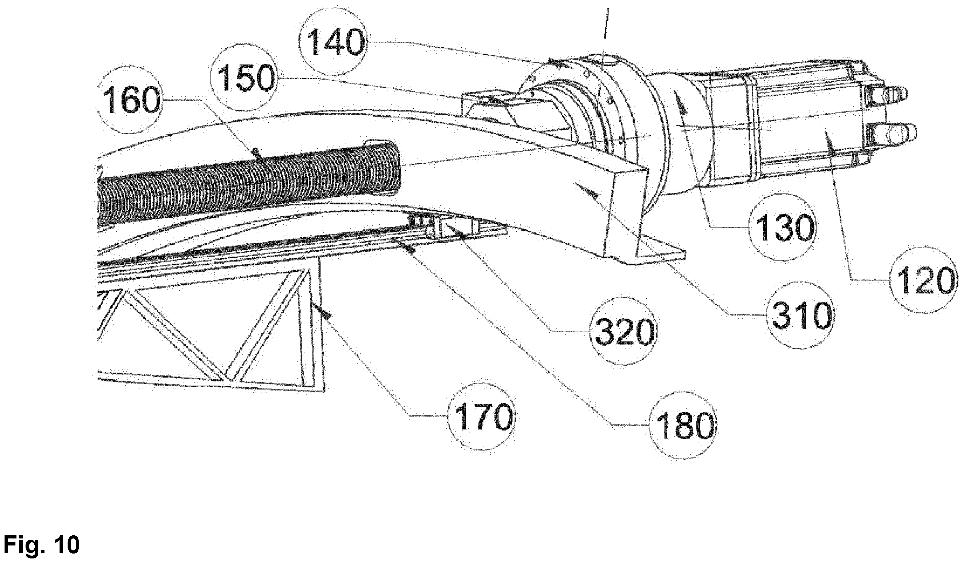

Radiale und tangentiale Lasten, welche durch das Stellsystem gemäß dem dritten Untersystem entstehen können oder in dieses eingetragen werden, werden durch ein Schienen-Schlitten-System 170, 180 und 320 aufgenommen, das den ersten Aktorring 310 mit der statischen Gondel "SC" 100 verbindet. Eine Lösung für ein Schienen-Schlitten- System ist in Figur 10 dargestellt. Das Schienen-Schlitten-System besteht aus je einem Schiene-Schlitten-Paar unter jedem Gewindespindeltrieb 160. Dadurch wird die erforderliche Entlastung der Gewindespindeltriebe 160 quer zur Achse gewährleistet.

Befindet sich das Stellsystem gemäß dem dritten Untersystem in der vordersten Position a), so berühren sich der dritte Aktorring 360 und der Gondelring 210 des zum zweiten Untersystem gehörenden beweglichen Gondelteils "TC" 200. Befindet sich das Stellsystem gemäß dem dritten Untersystem in der Position b) so berühren sich der Gondelring 210 und der zweite Aktorring 340.

In den Figuren 5 bis 8 sind verschiedene Ausschnitte des Aktorsystems mit Blick auf wesentliche statische, Stell- und Schubumkehrkomponenten in verschiedenen Stellungen; die wie sie vorstehend beschrieben sind, dargestellt.

Figur 5 stellt dabei einen Ausschnitt des Aktorsystems mit Blick auf die wesentlichen statischen, Stell- und Schubumkehr-Komponenten dar und zwar in einer neutralen Stellung der variablen Nebenstromdüse und verschlossener, insbesondere verstauter Schubumkehreinrichtung.

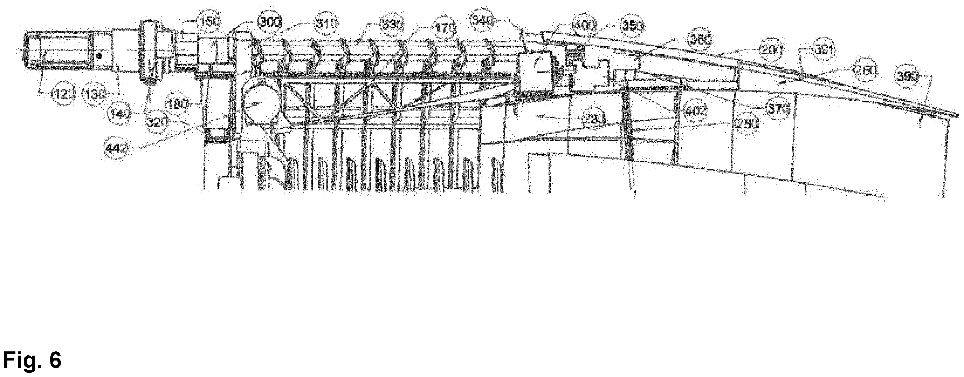

Figur 6 stellt einen Ausschnitt des Aktorsystems mit Blick auf die wesentlichen statischen, Stell- und Schubumkehr-Komponenten dar und zwar in einer minimalen Stellung der variablen Nebenstromdüse und verschlossener, insbesondere verstauter Schubumkehreinrichtung.

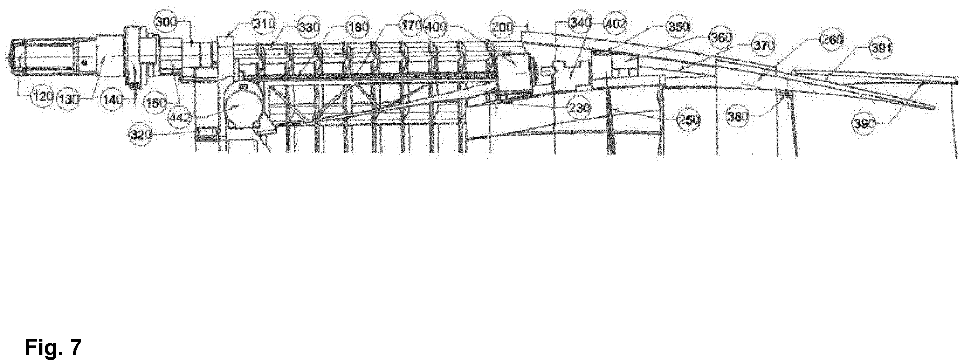

Figur 7 stellt einen Ausschnitt des Aktorsystems mit Blick auf die wesentlichen statischen, Stell- und Schubumkehr-Komponenten dar und zwar in einer maximalen Stellung der variablen Nebenstromdüse und verschlossener, insbesondere verstauter Schubumkehreinrichtung.

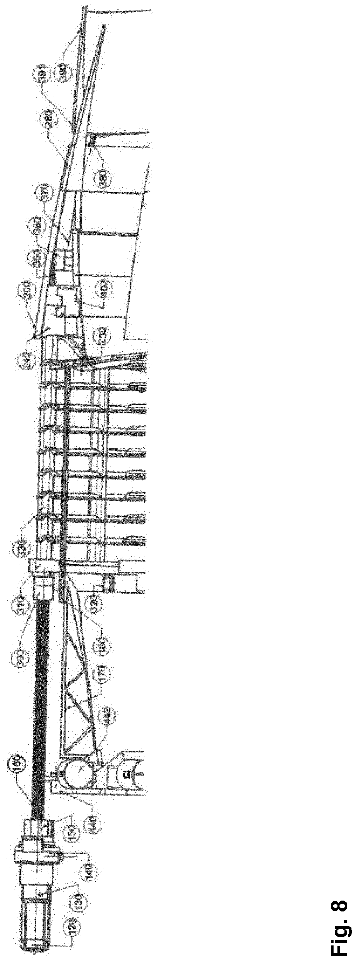

Figur 8 stellt einen Ausschnitt des Aktorsystems mit Blick auf die wesentlichen statischen, Stell- und Schubumkehr-Komponenten dar und zwar in einer maximalen Stellung der variablen Nebenstromdüse und einer aktivierten Schubumkehreinrichtung.

Während des Betriebs der variablen Nebenstromdüse, beispielsweise beim Öffnen der Düse während des Take-Offs, sind alle Schubumkehr-Verschlüsse gemäß dem vierten Untersystem verschlossen. Der Verschluss Bremse 140, welcher sich beim Verfahren kurzzeitig öffnen muss, ist Teil des Antriebssystems. Das Antriebssystem ist während des Betriebs der variablen Nebenstromdüse nicht in Verbindung mit dem Schubumkehrsystem. Für die Schubumkehreinrichtung stehen drei unabhängig angesteuerte Sicherungseinrichtungen in Form von Verschlusssystemen zur Verfügung:
Bei einer ersten Sicherungseinrichtung, die in Figur 11 dargestellt ist, handelt es sich um die in den Figuren 2 bis 4 dargestellte Hakenverschlusseinrichtung 395.

Hierbei handelt es sich um ein, ähnlich marktüblicher Hakenverschlüsse ausgeführtes, "U-Verschluss"-Konzept. Dieses stellt eine lösbare Verbindung zwischen Schubumkehrgehäuse "TC" 200 und statischer Gondel "SC" 100 her. Die Verbindung wird hergestellt mittels Doppelhaken 430, die über einen Zugfedermechanismus 431 zusammengezogen werden und sich um einen gemeinsamen Bolzen 432 drehen auf der Seite der statischen Gondel "SC" 100, sowie einer Aussparung in der verschiebbaren Gondel "TC" 200. Auf der Innenseite der Doppelhaken 430 befindet sich ein integrierter Zapfen beziehungsweise eine Verjüngung 433, über welche Rollen 434 gefahren werden können um die Doppelhaken 430 zu lösen. Dazu können die Rollen über ein Stellglied 435 mit einem Linearaktor 436 verfahren werden. Beim Heranführen des Schubumkehrergehäuses "TC" 200 an die statische Gondel "SC" 100 ist der Verschluss selbstverschließend. Die Haltekräfte der Doppelhaken 430 werden in den Bolzen 432 und über ihn weiter an eine Stützstruktur 437 abgeleitet. Auf der Seite der beweglichen Gondel "TC" 200 ist eine Aussparung 438 zum Eindringen der Haken notwendig. Der Verschluss ist redundant mindestens zweimal pro Gondelhälfte ausgeführt.

Bei einer zweiten Sicherungseinrichtung, die in den Figuren 12 bis 16 dargestellt ist, handelt es sich um die in den Figuren 2 bis 4 dargestellte Ring-Verschlusseinrichtung 396. Die Ring-Verschlusseinrichtung wird nachfolgend auch als "Ring-Lock" bezeichnet.

Der "Ring-Lock" hindert das Stellsystem gemäß dem Untersystem an dem Verfahren über eine spezifische Position hinaus und damit die Zurverfügungstellung von Stellkraft für die Schubumkehreinrichtung.

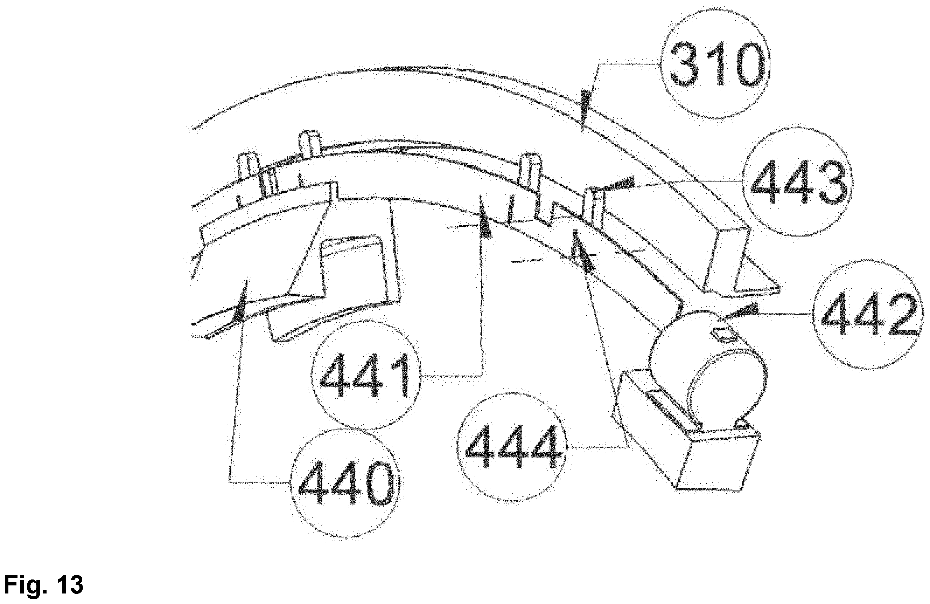

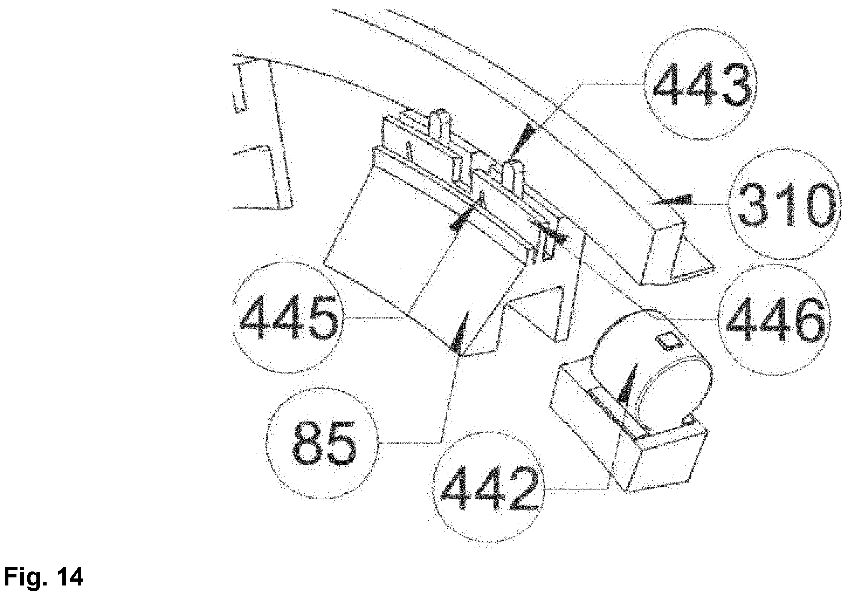

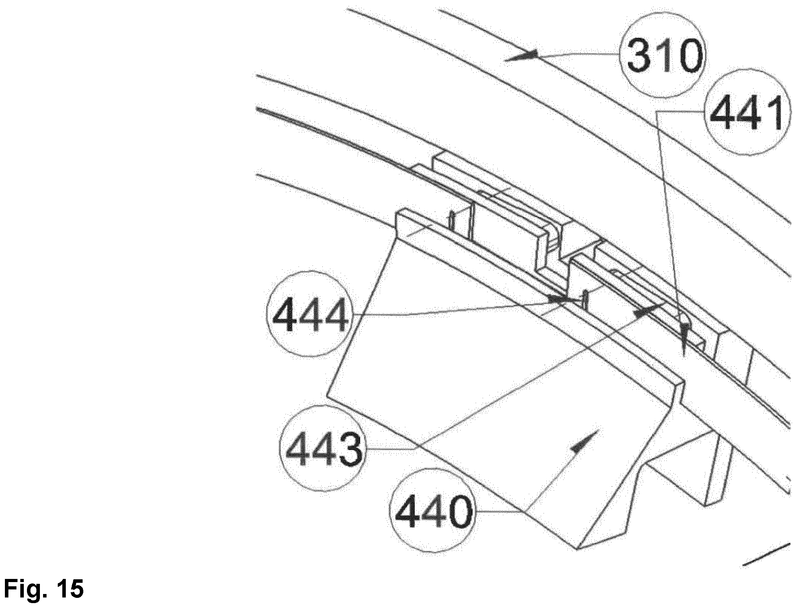

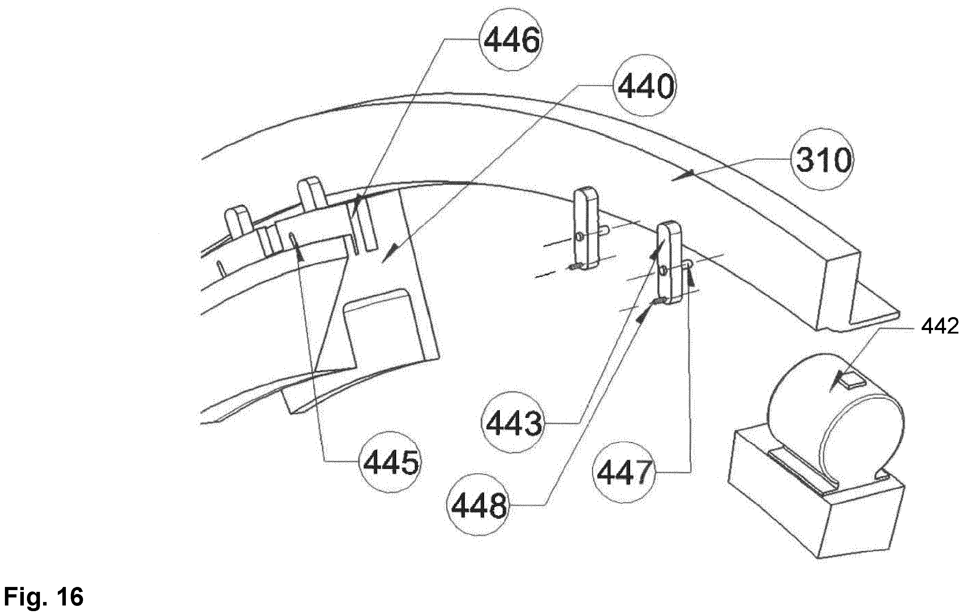

Figur 12 gibt einen Überblick auf die Ring-Verschlusseinrichtung im verschlossenen Zustand. Figur 13 zeigt den Verstellmechanismus des Ring-Lock-Systems. Figur 14 zeigt den Kraftschluss des Ring-Lock-Systems. Figur 15 verdeutlicht die Position des Ring-Lock Aktorrings und der Haltehebel in unverschlossenem Zustand. Figur 16 zeigt ein Detail des Ring-Lock-Haltehebels.

Die Ring-Verschlusseinrichtung besteht pro Einheit aus zwei um ca. 90 Grad verstellbaren Hebeln 443, die in einem Zustand das Verfahren des ersten Aktorrings 310 über eine bestimmte axiale Position hinaus verhindern. Die axiale Position ist die Position des Stellsystems gemäß dem dritten Untersystem, in der die variable Nebenstromdüse maximal ist und die Schubumkehreinrichtung noch deaktiviert ist. Der zweite Zustand der Verschlusseinrichtung lässt das weitere Verfahren zu. Zum Verstellen des Verschlusses sind die Hebel 443 durch die Hebelachse 447 an der Vor- und an der Rückseite mit einer Halterung 440 verbunden und, beispielsweise durch ein Kugellager, drehbar gelagert. Axiale Lasten können aufgenommen werden und werden durch die Halterung 440 in die statische Gondel "SC" 100 abgeführt. An dem dem ersten Aktorring 310 abgewendeten Ende der Hebel 443 ist ein Pin 448 befestigt, der das Drehen um die Hebelachse 447 ermöglicht. Dieser Pin 448 wird durch den rückwärtigen Ring 446 der Halterung 440 hindurch geführt. Dies ist durch eine gekurvte Aussparung 445 möglich. Der Pin 448 ist dann mit einem drehbaren Ring 441 verbunden. Der drehbare Ring 441 hat eine linear geformte Aussparung 444 die eine präzise Führung des Pins 448 und damit das Drehen der Hebel 443 ermöglicht. Der drehbare Ring 441 wird mit je einem kleinen Linearaktor 442 am jeweiligen Ende der Gondelhälften angesteuert. Pro Gondelhälfte werden mehrere dieser Verschlusseinheiten verwendet die mit dem gleichen drehbaren Ring 441 verbunden sind.

Bei einer dritten Sicherungseinrichtung, die in den Figuren 17 bis 20 dargestellt ist, handelt es sich um die in den Figuren 2 bis 4 dargestellte Verschluss-Koppel-Einrichtung 397.

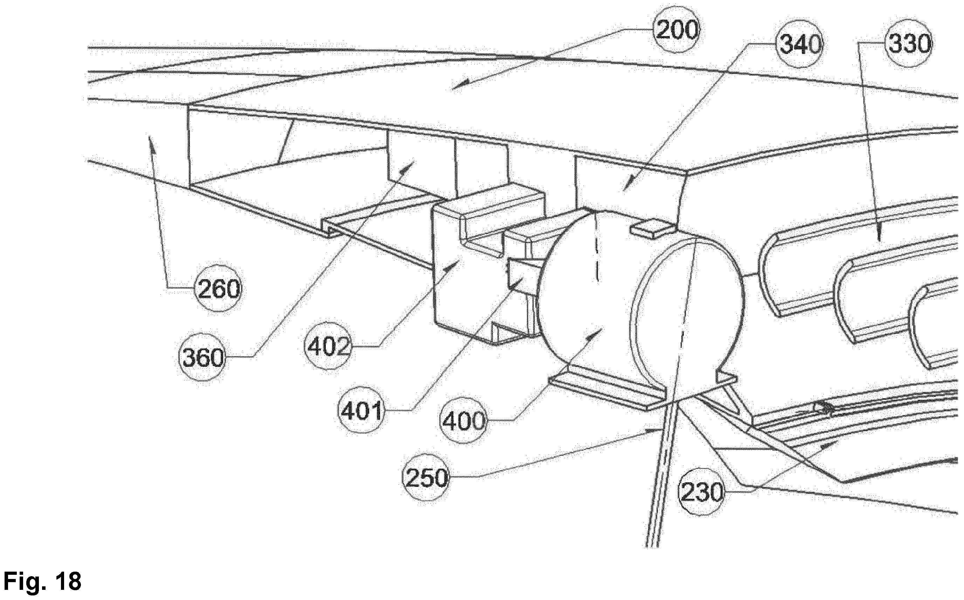

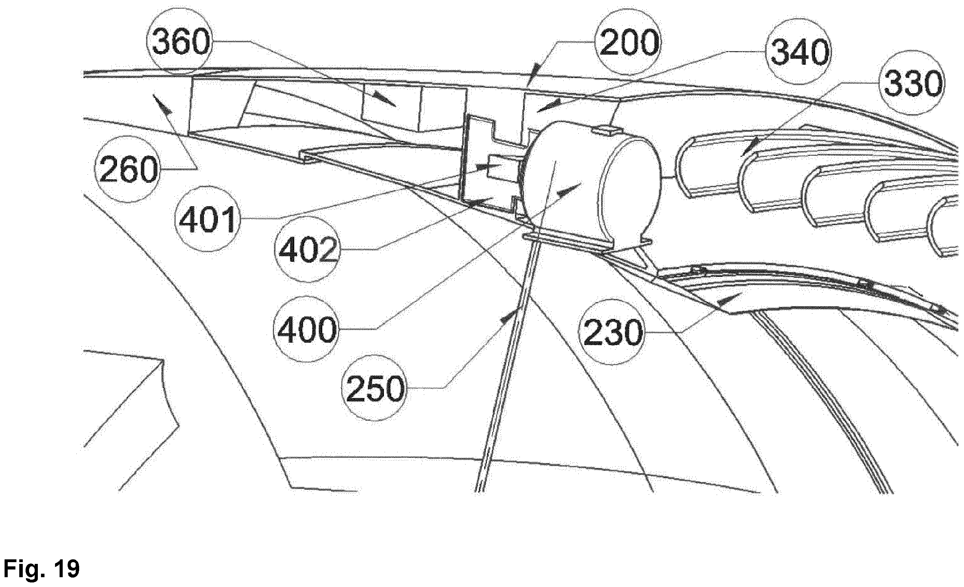

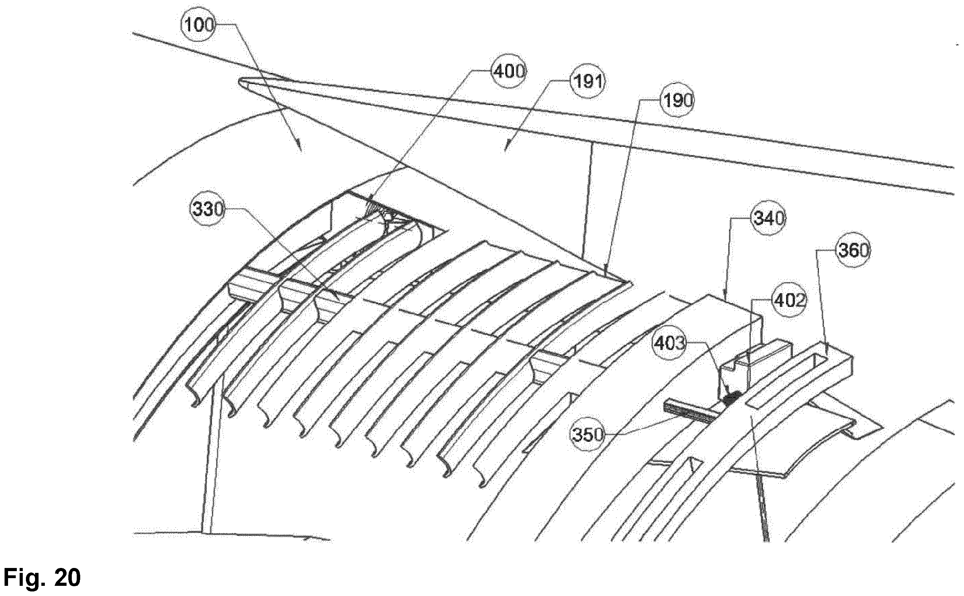

Figur 17 zeigt die Position dieser Einrichtung in der statischen Gondel "SC" im verschlossenen Zustand. Figur 18 zeigt die Position und Stellung dieser Einrichtung relativ zum Stellsystem gemäß dem dritten Untersystem und zur Schubumkehreinrichtung in verschlossenem Zustand. Figur 19 verdeutlicht die Stellung dieser Einrichtung im geöffneten/gekoppeltem Zustand bei geschlossener Schubumkehreinrichtung. Figur 20 zeigt die Stellung der Einrichtung im geöffneten/gekoppelten Zustand bei geöffneter Schubumkehreinrichtung.

Die Koppel-Verschluss-Einrichtung erfüllt zwei Funktionen, indem sie in der Position "Verschluss" " den Gondelring 210 des beweglichen Triebwerkgondelteils "TC" 200 mit dem statischen Gondelteil "SC" 100 verbindet und damit die Schubumkehreinrichtung gegen eine Verstellung sichert, was auch in Figur 2 verdeutlicht ist. In der Position "Koppeln" koppelt die Koppel-Verschluss-Einrichtung den Gondelring 210 mit dem zweiten Aktorring 340, um eine feste Verbindung zwischen Stellsystem gemäß dem dritten Untersystem und Schubumkehrsystem gemäß dem zweiten Untersystem zu realisieren, was insbesondere auch in Figur 4 dargestellt ist. Dies ermöglicht ein kontrolliertes Öffnen und Schließen der Schubumkehreinrichtung.

Dieser Verschluss hat eine Klammer 402, welche mit einem elektromagnetisch-mechanischen Aktor 400 und einer Rampe 401 von der Position "Verschluss" in die Position "Koppeln" entgegen einer Federkraft einer Zugfeder 403 gedrückt wird. Die statische Gondel "SC" 100 als auch der zweite Aktorring 340 und der Gondelring 210 haben dazu geeignete Aussparungen zur Lastübertragung. Mit Beginn der Schließbewegung der Schubumkehreinrichtung von c) nach b) wird auch der Aktor 400 zurückgefahren. Die Federkraft drückt die Klammer 402 bei Erreichen der Schubumkehreinrichtung in Position b) selbstständig von der "Koppel"-Position in die "Verschluss"-Position. Die Klammer 402 hat in Richtung statischer Gondel "SC" 100 eine Rolle 404, die das reibungsarme Abrollen der Klammer 402 über die statische Gondel "SC" 100 und die Rampe 401 des Aktors 400 ermöglicht und ist am anderen Ende mit dem Gondelring 210 über die Zugfeder 403 verbunden. Die statische Gondel "SC" 100 verfügt im Bereich des Pylonen über eine Erweiterung 190 und damit über eine ausreichend lange Abrollfläche für die Klammer 402 beziehungsweise deren Rolle 404. Die Verschluss-Koppel-Einrichtung ist zweimal in der Gondel vorhanden, wobei jeder einzelne Mechanismus in der Lage ist, die maximal auftretenden Kräfte aufzunehmen. Die maximal auftretenden Kräfte liegen an, wenn die Gewindespindeln 160 unerlaubt betätigt werden.

Eine Variation dieses Mechanismus wird durch die Fixierung des Gondelrings 210 der beweglichen Gondel "TC" 200 mit dem dritten Aktorring 360 statt mit dem zweiten Aktorring 340 ermöglicht. In diesem Fall muss die Krümmung der Schiene der Düsenklappe 390 der variablen Nebenstromdüse umgedreht werden, um die Verfahr-Reihenfolge der Figuren 2, 3 und 4 einhalten zu können.

Abhängig von der Lastverteilung und der Leistungsfähigkeit der Komponenten der Verschlusssysteme können die Komponenten dabei einfach oder mehrfach ausgeführt sein. Insbesondere sind damit die Anzahl der Hakenverschlusseinrichtungen, die Verschluss-Koppeleinrichtungen und der Strukturbauteile 440, 443 der Ring-Verschlusseinrichtung adressiert.

Das Aus- und Einfahren der Schubumkehreinrichtung wird erreicht, indem eine Relativbewegung zwischen den Komponenten statische Gondel "SC" 100 und Schubumkehreinrichtung gemäß dem zweiten Untersystem erzeugt wird. Diese Relativbewegung ist möglich, wenn der Motor 120 des ersten Untersystems betätigt wird und gleichzeitig der Verschlussmechanismus Bremse 140 eine Drehung zulässt. Zusätzlich müssen die Verschlüsse des Schubumkehrsystems gemäß des vierten Untersystems geöffnet beziehungsweise von "geschlossen" auf "gekoppelt" gestellt werden. Sind diese vier Verschlusssysteme frei beweglich "Bremse 140", "Hakenverschlusseinrichtung", "Ring-Verschlusseinrichtung" entriegelt beziehungsweise bei der "Verschluss-Koppel-Einrichtung" gekoppelt, kann die Antriebsleistung des Motors 120 eine Relativbewegung der Schubumkehreinrichtung gemäß dem zweiten Untersystem hinsichtlich der statischen Gondel "SC" 100 vollführen. Dabei ist es über den Gondelring 210 fest an den zweiten Aktorring 340 und damit an das Stellsystem gemäß dem dritten Untersystem gebunden. In diesem Zustand kann der Schubumkehrer gemäß dem zweiten Untersystem mit dem Stellsystem gemäß dem dritten Untersystem von Position b) Schubumkehrer geschlossen zu Position c) Schubumkehrer geöffnet verfahren, dort verharren und wieder von Position c) zu Position b) zurückfahren. Im geöffneten Zustand ist der Schubumkehrer gemäß dem zweiten Untersystem üblicherweise nicht mehr als 10 Sekunden, während der Verzögerung des Flugzeugs. Das Ausfahren und Einfahren des Schubumkehrers gemäß dem zweiten Untersystem beträgt meist je unter 2 Sekunden.

Beim Ausfahren der Schubumkehreinrichtung wird eine Strömungspassage, siehe D in Figur 1, zwischen der statischen Gondel 24 beziehungsweise 100 und der beweglichen Gondel "TC" 26 beziehungsweise 200 freigegeben. Gleichzeitig werden durch das Verfahren des Stellsystems gemäß dem dritten Untersystem die in ihm integrierten Kaskadensegmente 330 mit Umlenkschaufeln in die Strömungspassage zwischen beweglicher Gondel "TC" 26/200 und statischer Gondel 24/100 geschoben, sowie der Nebenstromkanal 17 durch Blockadetüren 230 versperrt. Die Blockadetüren 230 sind üblicherweise an der vorderen inneren Kante der beweglichen Gondel 26/200 gelenkig gelagert, sowie über gelenkig gelagerte Befestigungsstangen in Form der Zugstangen 250 mit der inneren Kontur des Nebenstromkanals 17 beziehungsweise mit dem Kerntriebwerk 18 gelenkig verbunden. Damit wird das aerodynamisch günstige Anlegen der Blockadetüren 230 an die äußere Kontur des Nebenstromkanals 17 während der Inaktivität der Schubumkehreinrichtung 27 gewährleistet und gleichzeitig eine Methode zur Verfügung gestellt, den Nebenstromkanal 17 im Schubumkehrbetrieb zu verschlie-ßen.

Die Systeme Schubumkehrer gemäß dem zweiten Untersystem und Stellsystem gemäß dem dritten Untersystem sind solange verbunden, bis der Schubumkehrer wieder in der verschlossenen Position b) angekommen ist beziehungsweise sich statische Gondel 24/100 und bewegliche Gondel 26/200 berühren. Die Hakenverschlusseinrichtung verschließt sich bei Kontakt der beweglichen Gondel 26/200) mit der statischen Gondel 24/100 selbst. Das gleiche gilt für die Verschluss-Koppel-Einrichtung, die sich selbst von Zustand "Koppeln" zum Zustand "Verschluss" verschließt. Die Ring-Verschlusseinrichtung wird durch ihren Aktor 442 wieder in die verschlossene Position gebracht, unmittelbar nachdem der Kontakt zwischen der beweglichen Gondel 26/200 und der statischen Gondel 24/100 hergestellt wurde beziehungsweise die Hakenverschlusseinrichtung und die Ring-Verschlusseinrichtung geschlossen sind. Die Position der beweglichen Gondelteile und der Düsenklappe wird durch Kontaktschalter, Absolutwertgeber hinsichtlich der axialen Position (LVDT, englisch für "linear variable differential transducer") und Auslenkung der variablen Nebenstromdüse (RVDT, englisch für "rotary variable differential transducer") sowie durch den Motorcontroller überwacht / detektiert.

Analog zum Betrieb der Düsenklappen 390 wird antriebsseitig ein Drehmoment vom Motor 120 über ein Planetengetriebe "PGB" 130 gewandelt und eine Gewindespindel 160 beziehungsweise ein Rollengewindetrieb in eine Drehbewegung versetzt, der letztendlich die Mutter 300 axial verschiebt. Die axiale Verschiebung der Mutter 300 bewirkt eine axiale Verschiebung des mit ihr fest verbundenen ersten Aktorrings 310. Der zweite Aktorring 340 ist während des Betriebs der Schubumkehreinrichtung über die Verschluss-Koppel-Einrichtung fest verbunden mit dem Gondelring 210 des beweglichen zweiten Triebwerkgondelteils 200 und bewirkt damit auch eine axiale Bewegung des Schubumkehrers relativ zur statischen Gondel gemäß dem ersten Untersystem. Eine Relativbewegung zwischen Schubumkehrer gemäß dem zweiten Untersystem und dem Stellsystem gemäß dem dritten Untersystem inklusive variabler Nebenstromdüse ist im Schubumkehrbetrieb nicht möglich. Die variable Nebenstromdüse verharrt für diesen Zeitraum im maximal geöffneten Zustand.

Gesteuert wird eine Schubumkehreinrichtung typischerweise von einem eigenen Regelungssystem. Dieses erhält
- Informationen vom Bordcomputer des Triebwerks über z.B. die Drehzahl,
- vom Bordcomputer des Flugzeugs über die Stellung des Schubhebels im Cockpit. Der Schubhebel besitzt üblicherweise eine Vorrichtung für den Piloten zum Signalisieren des Bedarfs und der Höhe des Umkehrschubs.
- Sowie durch einen Sensor am Fahrwerk des Flugzeugs, welcher Bodenkontakt detektieren kann. Schubumkehrsysteme werden in der zivilen Luftfahrt ausschließlich am Boden und zum Verzögern betrieben.

Die drei Freigabe-Informationen zum Regelungssystem des Schubumkehrers werden genutzt, um die drei oben beschriebenen Sicherungseinrichtungen, bei denen es sich insbesondere um mechanische Verschlüsse handelt, anzusteuern. Dabei kann das Schubhebelsignal des Flugzeugcomputers für die Hakenverschlusseinrichtung verwendet werden, sowie der Triebwerksstatus, beispielsweise die Drehzahl, für die Ring-Verschlusseinrichtung und der Fahrwerkssensor für Bodenkontakt für die Verschluss-Koppel-Einrichtung genutzt werden.

Weiterhin ist es möglich die drei Freigabe-Informationen zu nutzen, um ein gegenseitiges doppeltes oder dreifaches Validieren der Freigabe-Informationen durchzuführen und erst dann eine Freigabe für die nachfolgenden mechanischen und elektrischen oder hydraulischen Komponenten zu erteilen. Mindestens eines der Freigabe-Informationen wird verwendet, um eine Isolationseinheit, welche die Zufuhr von hydraulischer oder elektrischer Stellenergie zu den Verschlüssen verhindert, zu steuern.

### Bezugszeichenliste

- 10: Strahltriebwerk
- 11: Triebwerkeinlass
- 12: Pylon
- 14: Flugzeugflügel
- 16: Fan
- 17: Nebenstromkanal
- 18: Kerntriebwerk
- 20: Kerntriebwerkgehäuse
- 22: Triebwerkgondel
- 24: Erster Triebwerkgondelteil (statisch)
- 26: Zweiter Triebwerkgondelteil (beweglich)
- 27: Schubumkehreinrichtung
- 28: Kaskaden
- 30: Blockadetüren
- 32: Dritter Triebwerkgondelteil
- 33: Variable Nebenstromdüse
- 34: Austrittsfläche der Nebenstromdüse
- 100: Statischer Triebwerkgondelteil
- 110: Lagerstruktur
- 120: Antriebsmotor
- 130: Planetengetriebe
- 140: Bremse
- 150: Kugellager
- 160: Gewindespindel
- 170: Stützstruktur
- 180: Schiene
- 190: Erweiterung des ersten Triebwerkgondelteils
- 191: Pylon
- 200: Beweglicher Triebwerkgondelteil
- 210: Gondelring
- 220: Schlitten
- 230: Blockadetüre
- 240: Schiene
- 250: Zugstange
- 260: Statischer Teil der Nebenstromdüse
- 300: Gewindemutter
- 310: Erster Aktorring
- 330: Kaskadensegment
- 340: Zweiter Aktorring
- 350: Schiene
- 360: Dritter Aktorring
- 370: Lange Koppelstange
- 380: Kurze Koppelstange
- 390: Düsenklappe
- 391: Schlitten der Düsenklappe
- 395: Hakenverschlusseinrichtung
- 396: Ring-Verschlusseinrichtung
- 397: Verschluss-Koppel-Einrichtung
- 400: Aktor
- 401: Rampe
- 402: Klammer
- 403: Zugfeder
- 404: Rolle
- 430: Doppelhaken
- 431: Zugfedermechanismus
- 432: Bolzen
- 433: Verjüngung
- 434: Rolle
- 435: Stellglied
- 436: Linearaktor
- 437: Stützstruktur
- 438: Aussparung
- 440: Halterung
- 441: Drehbarer Ring
- 442: Linearaktor
- 443: Hebel
- 444: Linear geformte Aussparung
- 445: Gekurvte Aussparung
- 446: Rückwärtiger Ring der Halterung
- 447: Hebelachse
- 448: Pin

## Patentansprüche

1. Strahltriebwerk (10), aufweisend eine Triebwerkgondel (22), ein innerhalb der Triebwerkgondel (22) angeordnetes Kerntriebwerk (18) mit einem das Kerntriebwerk (18) umgebenden Kerntriebwerkgehäuse (20), wobei durch das Kerntriebwerk (18) ein Kernstrom (C) führbar oder geführt ist, einen zwischen dem Kerntriebwerkgehäuse (20) und der Triebwerkgondel (22) verlaufenden Nebenstromkanal (17), wobei durch den Nebenstromkanal (17) ein Nebenstrom (B) führbar oder geführt ist, eine Schubumkehreinrichtung (27), die ausgebildet ist, dass sie im aktivierten Betriebszustand nur den Nebenstrom (B) des Nebenstromkanals (17) umlenkt, eine variable Nebenstromdüse (33), welche zur Bereitstellung einer variablen Austrittsfläche (34) der Nebenstromdüse (33) ausgebildet ist und variable Stellflächen aufweist, ein einziges gemeinsames Aktorsystem für die Schubumkehreinrichtung (27) und die variable Nebenstromdüse (33), welches derart bereitgestellt ist, dass es in der Lage ist, die Schubumkehreinrichtung (27) und die variable Nebenstromdüse (33) mechanisch miteinander zu koppeln und voneinander zu entkoppeln, das Aktorsystem eine Stelltriebeinrichtung aufweist, welche mit der variablen Nebenstromdüse (33) verbunden ist, dass die Stelltriebeinrichtung zum Stellen der variablen Stellflächen der Nebenstromdüse (33) ausgebildet ist, und dass das Aktorsystem ausgebildet ist, dass die Schubumkehreinrichtung (27) wahlweise hinzugeschaltet und mitbewegt wird,
die Triebwerkgondel (22) in Strömungsrichtung des das Strahltriebwerk (10) durchströmenden Strömungsmediums einen vorderen ersten Triebwerkgondelteil (24, 100) aufweist, der eingangsseitig einen Einlass (11) aufweist, und dass der erste Triebwerkgondelteil (24, 100) insbesondere statisch ist,
die Triebwerkgondel (22) in Strömungsrichtung des das Strahltriebwerk (10) durchströmenden Strömungsmediums einen sich an den ersten Triebwerkgondelteil (24, 100) anschließenden zweiten Triebwerkgondelteil (26, 200) aufweist, welcher die Schubumkehreinrichtung (27) aufweist, und dass insbesondere der zweite Triebwerkgondelteil (26, 200) relativ zum ersten Triebwerkgondelteil (24, 100) in axialer Richtung beweglich gelagert ist,
das Aktorsystem ein Untersystem, als drittes Untersystem bezeichnet, mit Betätigungskomponenten und Translationsbauteilen aufweist, die axial verschiebbar sind und die direkt mit der variablen Nebenstromdüse (33) verbunden sind, und dass die Betätigungskomponenten und Translationsbauteile einen ersten Aktorring (310) aufweisen, der mit einer Sicherungseinrichtung zum Begrenzen der Bewegung des ersten Aktorrings (310) in axialer Richtung zusammenwirkt, und
das Aktorsystem ein weiteres Untersystem, als viertes Untersystem bezeichnet, mit wenigstens einer Sicherungseinrichtung aufweist, welche bereitgestellt ist, dass sie die Schubumkehreinrichtung (27) gegen ein unbeabsichtigtes Betätigen sichert,
und wobei
wenigstens eine Sicherungseinrichtung wenigstens eine Hakenverschlusseinrichtung (395) aufweist, welche zur lösbaren Verbindung des ersten Triebwerkgondelteils (24, 100) mit dem zweiten Triebwerkgondelteil (26, 200) ausgebildet ist und dass die Betätigung der Hakenverschlusseinrichtung (395) insbesondere über das Aktorsystem erfolgt, **dadurch gekennzeichnet, dass**
wenigstens eine Sicherungseinrichtung als wenigstens eine Ring-Verschlusseinrichtung (396) ausgebildet ist, und dass die Ring-Verschlusseinrichtung (396) ausgebildet ist, um im aktivierten Betriebszustand den Bewegungsweg des ersten Aktorrings (310) des dritten Untersystems des Aktorsystems in axialer Richtung zu begrenzen,
und dass
wenigstens eine Sicherungseinrichtung als eine Verschluss-Koppel-Einrichtung (397) ausgebildet ist, die bereitgestellt ist, dass sie in einer ersten Funktion die Variation der variablen Nebenstromdüse (33) gestattet und eine Translation des zweiten Triebwerkgondelteils (26, 200) mit der Schubumkehreinrichtung (27) verhindert, und dass sie in einer zweiten Funktion eine Translation des zweiten Triebwerkgondelteils (26, 200) mit der Schubumkehreinrichtung (27) gestattet.

2. Strahltriebwerk nach Anspruch 1, **dadurch gekennzeichnet, dass** die Triebwerkgondel (22) in Strömungsrichtung des das Strahltriebwerk (10) durchströmenden Strömungsmediums einen sich an den zweiten Triebwerkgondelteil (26, 200) anschließenden dritten Triebwerkgondelteil (32) aufweist, welcher die variablen Stellflächen der variablen Nebenstromdüse (33) beinhaltet.

3. Strahltriebwerk nach einem der Ansprüche 1 bis 2, **dadurch gekennzeichnet, dass** die Schubumkehreinrichtung (27) als Kaskaden-Schubumkehreinrichtung ausgebildet ist und/oder dass die variable Nebenstromdüse (33) als Nebenstromdüse in Klappenausführung ausgebildet ist.

4. Strahltriebwerk nach einem der Ansprüche 1 bis 3, **dadurch gekennzeichnet, dass** das Aktorsystem ein erstes Untersystem mit Aktorkomponenten aufweist, die mit dem ersten Triebwerkgondelteil (24, 100) verbunden sind, und dass die Aktorkomponenten insbesondere wenigstens einen Antrieb (120) und wenigstens ein Stelltriebelement (160) aufweisen.

5. Strahltriebwerk nach einem der vorangehenden Ansprüche **dadurch gekennzeichnet, dass** das Aktorsystem ein weiteres Untersystem, als zweites Untersystem bezeichnet, mit strukturellen Komponenten der Schubumkehreinrichtung (27) aufweist, die insbesondere derart ausgebildet sind, dass sie zur Betätigung der Schubumkehreinrichtung (27) bewegt werden oder bewegbar sind.

6. Strahltriebwerk nach einem der vorangehenden Ansprüche, **dadurch gekennzeichnet, dass** das Aktorsystem einen zweiten Aktorring (340) und/oder einen dritten Aktorring (360) aufweist, der /die mit einem Anschlag insbesondere einem Ring (210), des zweiten Triebwerkgondelteils (26, 200) zusammenwirkt/zusammenwirken.

7. Strahltriebwerk nach einem der vorangehenden Ansprüche, **dadurch gekennzeichnet, dass** die Ring-Verschlusseinrichtung (396) ausgebildet ist, um im aktivierten Betriebszustand den Bewegungsweg des ersten Aktorrings (310) des dritten Untersystems des Aktorsystems in axialer Richtung über die Position der Ring-Verschlusseinrichtung (396) hinaus zu begrenzen.

8. Verfahren zum Betrieb eines Strahltriebwerks nach einem der Ansprüche 1 bis 7, aufweisend eine Triebwerkgondel, ein innerhalb der Triebwerkgondel angeordnetes Kerntriebwerk mit einem das Kerntriebwerk umgebenden Kerntriebwerkgehäuse, wobei durch das Kerntriebwerk ein Kernstrom geführt wird, einen zwischen dem Kerntriebwerkgehäuse und der Triebwerkgondel verlaufenden Nebenstromkanal, wobei durch den Nebenstromkanal ein Nebenstrom geführt wird, eine Schubumkehreinrichtung, die im aktivierten Betriebszustand nur den Nebenstrom des Nebenstromkanals umlenkt, eine variable Nebenstromdüse mit variablen Stellflächen, über welche die Austrittsfläche verändert wird, **dadurch gekennzeichnet, dass** die Schubumkehreinrichtung und die variable Nebenstromdüse über einziges gemeinsames Aktorsystem betätigt werden, indem das Aktorsystem über eine Stelltriebeinrichtung, welche mit der variablen Nebenstromdüse verbunden ist, im Betriebszustand "Nebenstromdüse", die variablen Stellflächen der Nebenstromdüse zum Verändern der Austrittsfläche der Nebenstromdüse verstellt und im Betriebszustand "Schubumkehr" die Schubumkehreinrichtung hinzuschaltet und mitbewegt.

## Claims

1. Jet engine (10), having an engine nacelle (22), a core engine (18) arranged within the engine nacelle (22) with a core engine casing (20) surrounding the core engine (18), wherein a core flow (C) is conductible or conducted through the core engine (18), a bypass channel (17) running between the core engine casing (20) and the engine nacelle (22), wherein a bypass flow (B) is conductible or conducted through the bypass channel (17), a thrust reverser (27), which is designed such that it only diverts the bypass flow (B) of the bypass channel (17) in the activated operating state, a variable bypass nozzle (33) which is designed to provide a variable exit area (34) of the bypass nozzle (33) and has variable control areas, a single common actuator system for the thrust reverser (27) and the variable bypass nozzle (33), which is provided in such a way that the thrust reverser (27) and the variable bypass nozzle (33) can be mechanically coupled together and decoupled from each other, the actuator system has a actuating drive unit, which is connected to the variable bypass nozzle (33), that the actuating drive unit is designed to set the variable control areas of the bypass nozzle (33), and that the actuator system is designed so that the thrust reverser (27) is selectively engaged and moved along, the engine nacelle (22) has, in the flow direction of the flow medium passing through the jet engine (10), a front first engine nacelle part (24, 100), which has an inlet (11) on the input side, and that the first engine nacelle part (24, 100) is particularly static, the engine nacelle (22) has, in the flow direction of the flow medium passing through the jet engine (10), a second engine nacelle part (26, 200) adjoining the first engine nacelle part (24, 100), which has the thrust reverser (27), and that in particular the second engine nacelle part (26, 200) is particularly mounted to be movable in the axial direction relative to the first engine nacelle part (24, 100), the actuator system has a subsystem, referred to as third subsystem, with actuation components and translation components that are axially shiftable and that are directly connected to the variable bypass nozzle (33), and that the actuation components and translation components have a first actuator ring (310), which cooperates with a securing device to limit the axial movement of the first actuator ring (310), and the actuator system has a further subsystem, referred to as fourth subsystem, with at least one securing device provided to secure the thrust reverser (27) against unintentional actuation, and wherein at least one securing device has at least one hook closure device (395), which is designed for the releasable connection of the first engine nacelle part (24, 100) with the second engine nacelle part (26, 200), and that the actuation of the hook closure device (395) is particularly performed via the actuator system, **characterized in that**, at least one securing device is designed as at least one ring closure device (396), and that the ring closure device (396) is designed to limit the movement path of the first actuator ring (310) of the third subsystem of the actuator system in the axial direction in the activated operating state, and that at least one securing device is designed as a closure-coupling device (397) provided in such a way that in a first function it allows the variation of the variable bypass nozzle (33) and prevents a translation of the second engine nacelle part (26, 200) with the thrust reverser (27), and that in a second function it allows a translation of the second engine nacelle part (26, 200) with the thrust reverser (27).

2. Jet engine according to claim 1, **characterized in that** the engine nacelle (22) has, in the flow direction of the flow medium passing through the jet engine (10), a third engine nacelle part (32) adjoining the second engine nacelle part (26, 200), which includes the variable control areas of the variable bypass nozzle (33).

3. Jet engine according to any one of claims 1 to 2, **characterized in that** the thrust reverser (27) is designed as a cascade thrust reverser and/or that the variable bypass nozzle (33) is designed as a flap-type bypass nozzle.

4. Jet engine according to any one of claims 1 to 3, **characterized in that** the actuator system has a first subsystem with actuator components, which are connected to the first engine nacelle part (24, 100), and that the actuator components have particularly at least a drive (120) and at least a actuation drive element (160).

5. Jet engine according to any one of the preceding claims, **characterized in that** the actuator system has a further subsystem, referred to as second subsystem, with structural components of the thrust reverser (27), which are particularly designed to be moved or movable for actuating the thrust reverser (27).

6. Jet engine according to any one of the preceding claims, **characterized in that** the actuator system has a second actuator ring (340) and/or a third actuator ring (360), which interacts/interact with a stop, in particular a ring (210), of the second engine nacelle part (26, 200).

7. Jet engine according to any one of the preceding claims, **characterized in that** the ring closure device (396) is designed to limit in the activated operating state the movement path of the first actuator ring (310) of the third subsystem of the actuator system beyond the position of the ring closure device (396) in the axial direction.

8. Method for operating a jet engine according to any one of claims 1 to 7, having an engine nacelle, a core engine arranged within the engine nacelle with a core engine casing surrounding the core engine, wherein a core flow is conducted through the core engine, a bypass channel running between the core engine casing and the engine nacelle, wherein a bypass flow is conducted through the bypass channel, a thrust reverser which in the activated operating state deflects only the bypass flow of the bypass channel, a variable bypass nozzle with variable control areas through which the exit area is amended, **characterized in that** the thrust reverser and the variable bypass nozzle are operated via an actuating drive unit, which is connected with the variable bypass nozzle, in the operating state "bypass nozzle", shifts the variable bypass nozzles for amending the exit area of the bypass nozzle, and in the operating state "thrust reversal" engages and moves the thrust reverser along.

## Revendications

1. Turboréacteur (10), comprenant une nacelle de moteur (22), un moteur central (18) agencé à l'intérieur de la nacelle de moteur (22) avec une enveloppe de moteur (20) entourant le moteur central (18), un flux central (C) étant apte à être guidé ou étant guidé à travers le moteur central (18), un canal (17) de flux secondaire s'étendant entre l'enveloppe de moteur (20) et la nacelle de moteur (22), un flux secondaire (B) étant apte à être guidé ou étant guidé à travers le canal (17) de flux secondaire, un dispositif (27) d'inversion de poussée, qui est conçu de telle sorte qu'en état de fonctionnement activé, il ne dévie que le flux secondaire (B) du canal (17) de flux secondaire, une tuyère variable (33) de flux secondaire, qui est conçue pour fournir une surface variable (34) de sortie de la tuyère (33) de flux secondaire et qui présente des surfaces de positionnement variables, un système actionneur unique, commun pour le dispositif (27) d'inversion de poussée et la tuyère variable (33) de flux secondaire, qui est prévu de telle sorte qu'il est en mesure de coupler mécaniquement le dispositif (27) d'inversion de poussée et la tuyère variable (33) de flux secondaire l'un à l'autre et de les découpler l'un de l'autre,
le système actionneur présente un dispositif de commande de réglage qui est relié à la tuyère (33) de flux secondaire, le dispositif de commande de réglage étant conçu de façon à régler les surfaces de réglage variables de la tuyère (33) de flux secondaire, et le système actionneur étant conçu de telle sorte que le dispositif (27) d'inversion de poussée puisse, de façon choisie, être activé et déplacé en même temps,
la nacelle de moteur (22) présente, dans le sens d'écoulement du fluide d'écoulement traversant le turboréacteur (10), une première partie (24, 100), avant, de nacelle de moteur, qui présente une entrée (11) du côté de l'entrée, et la première partie (24, 100) de nacelle de moteur est notamment statique,
la nacelle de moteur (22) présente, dans le sens d'écoulement du fluide d'écoulement traversant le turboréacteur (10), une deuxième partie (26, 200) de nacelle de moteur se raccordant à la première partie (24, 100) de nacelle de moteur, qui présente le dispositif (27) d'inversion de poussée, et la deuxième partie (26, 200) de nacelle de moteur étant notamment montée de manière mobile dans le sens axial par rapport à la première partie (24, 100) de nacelle de moteur,
le système actionneur comprend un sous-système, appelé troisième sous-système, comprenant des composants d'actionnement et des composants de translation, qui sont aptes à être déplacés axialement et qui sont directement connectés à la tuyère (33) de flux secondaire, et les composants d'actionnement et les composants de translation comprennent un premier anneau actionneur (310) qui coopère avec un dispositif de sécurité pour limiter le mouvement du premier anneau actionneur (310) dans la direction axiale, et
le système actionneur comprend un autre sous-système, appelé quatrième sous-système, avec au moins un dispositif de sécurité, qui est prévu pour sécuriser le dispositif (27) d'inversion de poussée contre un actionnement involontaire,
et
au moins un dispositif de sécurité présentant au moins un dispositif (395) de fermeture à crochet qui est conçu pour relier de manière amovible la première partie (24, 100) de nacelle de moteur à la deuxième partie (26, 200) de nacelle de moteur et l'actionnement du dispositif (395) de fermeture à crochet s'effectuant en particulier par l'intermédiaire du système actionneur, **caractérisé en ce que**
au moins un dispositif de sécurité est réalisé sous la forme d'au moins un dispositif annulaire (396) de fermeture, et **en ce que** le dispositif annulaire (396) de fermeture est réalisé de manière à limiter, dans l'état de fonctionnement activé, la course de déplacement du premier anneau actionneur (310) du troisième sous-système du système actionneur dans la direction axiale,
et **en ce que**
au moins un dispositif de sécurité est réalisé sous la forme d'un dispositif de couplage-fermeture (397) qui est prévu pour permettre, dans une première fonction, la variation de la tuyère variable (33) de flux secondaire et pour empêcher une translation de la deuxième partie (26, 200) de nacelle de moteur avec le dispositif (27) d'inversion de poussée, et pour permettre, dans une deuxième fonction, une translation de la deuxième partie (26, 200) de nacelle de moteur avec le dispositif (27) d'inversion de poussée.

2. Turboréacteur selon la revendication 1, **caractérisé en ce que** la nacelle de moteur (22) présente, dans le sens d'écoulement du fluide traversant le turboréacteur (10), une troisième partie de nacelle de moteur (32) se raccordant à la deuxième partie (26, 200) de nacelle de moteur, qui contient les surfaces de positionnement variables de la tuyère variable (33) de flux secondaire.

3. Turboréacteur selon l'une des revendications 1 à 2, **caractérisé en ce que** le dispositif (27) d'inversion de poussée est conçu comme un dispositif d'inversion de poussée en cascade et/ou **en ce que** la tuyère (33) de flux secondaire est conçue comme une tuyère de dérivation en version à volets.

4. Turboréacteur selon l'une des revendications 1 à 3, **caractérisé en ce que** le système actionneur comporte un premier sous-système avec des composants d'actionnement qui sont reliés à la première partie (24, 100) de nacelle de moteur, et **en ce que** les composants d'actionnement comportent notamment au moins un système d'entraînement (120) et au moins un élément d'actionnement (160).

5. Turboréacteur selon l'une quelconque des revendications précédentes, **caractérisé en ce que** le système actionneur comporte un autre sous-système, dit deuxième sous-système, comprenant des composants structurels de l'inverseur de poussée (27), notamment configurés pour être déplacés ou déplaçables de façon à actionner l'inverseur de poussée (27).

6. Turboréacteur selon l'une des revendications précédentes, **caractérisé en ce que** le système actionneur comprend un deuxième anneau actionneur (340) et/ou un troisième anneau actionneur (360) coopérant avec une butée, notamment un anneau (210), de la deuxième partie de nacelle (26, 200) du moteur.

7. Turboréacteur selon l'une des revendications précédentes, **caractérisé en ce que** le dispositif annulaire (396) de fermeture est configuré pour limiter, en mode de fonctionnement activé, la course de déplacement du premier anneau actionneur (310) du troisième sous-système du système actionneur dans la direction axiale au-delà de la position du dispositif de fermeture d'anneau (396).

8. Procédé de fonctionnement d'un turboréacteur selon l'une quelconque des revendications 1 à 7, comprenant une nacelle de moteur, un moteur central agencé à l'intérieur de la nacelle de moteur avec une enveloppe de moteur entourant le moteur central, un flux central étant guidé à travers le moteur central, un canal de flux secondaire s'étendant entre l'enveloppe de moteur et la nacelle de moteur, un flux secondaire étant guidé à travers le canal de flux secondaire, un dispositif d'inversion de poussée qui, dans l'état de fonctionnement activé, dévie uniquement le flux secondaire du canal de flux secondaire, une tuyère variable de flux secondaire avec des surfaces de réglage variables, par lesquelles la surface de sortie est modifiée, **caractérisé en ce que** le dispositif d'inversion de poussée et la tuyère variable de flux secondaire sont actionnés par un seul système actionneur commun, **en ce que** le système actionneur est actionné par un dispositif de réglage, qui est relié à la tuyère variable de flux secondaire, déplace, dans l'état de fonctionnement "tuyère à flux secondaire", les surfaces de positionnement variables de la tuyère de flux secondaire de façon à modifier la surface de sortie de la tuyère de flux secondaire et, dans l'état de fonctionnement "inversion de poussée", connecte et déplace également le dispositif d'inversion de poussée.
